(19) Europäisches Patentamt
European Patent Office
Office européen des brevets

(11) **EP 3 208 440 B1**

(12) **EUROPÄISCHE PATENTSCHRIFT**

(45) Veröffentlichungstag und Bekanntmachung des Hinweises auf die Patenterteilung:
17.10.2018 Patentblatt 2018/42

(21) Anmeldenummer: **16195983.8**

(22) Anmeldetag: **27.10.2016**

(51) Int Cl.:
*F02B 75/22* (2006.01)    *F02B 75/18* (2006.01)
*F02B 75/02* (2006.01)    *F16C 3/04* (2006.01)
*F16F 9/12* (2006.01)    *F16F 15/30* (2006.01)

(54) **VIERTAKT-HUBKOLBENMOTOR IN V-BAUWEISE MIT 16 ZYLINDERN**

FOUR-STROKE RECIPROCATING PISTON ENGINE OF V TYPE WITH 16 CYLINDERS

MOTEUR À PISTONS ALTERNATIFS À QUATRE TEMPS EN V COMPRENANT 16 CYLINDRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.01.2016 CH 52016**

(43) Veröffentlichungstag der Anmeldung:
**23.08.2017 Patentblatt 2017/34**

(73) Patentinhaber: **Liebherr Machines Bulle SA**
**1630 Bulle (CH)**

(72) Erfinder:
• **Henninger, Christoph**
**1004 Lausanne (CH)**
• **Vasile, Iulian**
**1669 Albeuve (CH)**
• **Heintz, Simon**
**1632 Riaz (CH)**
• **Stadelmann, Martin**
**1717 St. Ursen (CH)**

(74) Vertreter: **Behr, Wolfgang**
**Lorenz Seidler Gossel**
**Rechtsanwälte Patentanwälte**
**Partnerschaft mbB**
**Widenmayerstraße 23**
**80538 München (DE)**

(56) Entgegenhaltungen:
**EP-A1- 1 367 238**    **EP-A1- 2 952 712**
**EP-B9- 1 793 104**    **DE-A1-102004 034 291**
**GB-A- 544 804**    **US-A- 1 752 713**
**US-A- 5 544 486**    **US-A- 6 092 016**
**US-A1- 2009 099 755**    **US-B1- 6 675 639**

**Beschreibung**

Die vorliegende Erfindung betrifft einen Viertakt-Hubkolbenmotor in V-Bauweise mit 16 Zylindern. Bei Viertakt-Hubkolbenmotoren in V-Bauweise sind die Zylinder in zwei Zylinderbänken angeordnet, welche in einem V-Winkel zueinander stehen.

Bei der Entwicklung von vielzylindrigen Hubkolbenmotoren ist die Auswahl einer geeigneten Zündfolge sowie eines geeigneten Kurbelsterns von fundamentaler Bedeutung, da diese die mechanischen und thermodynamischen Eigenschaften des Motors maßgeblich bestimmen. An erste Stelle ist hier die Torsionsdynamik der Kurbelwelle zu nennen, welche in erheblichem Umfang von der Zündfolge abhängt [Wil1935, Nes1958]. Daneben müssen weitere Aspekte berücksichtigt werden, wie die Ladungswechseldynamik, die Belastung der Kurbelwellenlagerung, sowie Motorbetriebsschwingungen. Für Hubkolbenmotoren mit einer geringen Zylinderanzahl mit bis zu sechs Zylindern für Hubkolbenmotoren in Reihenbauweise oder im Falle einer V-Bauweise mit bis zu 12 Zylindern ist die Anzahl möglicher Zündfolgen oder möglicher Kurbelsterne bereits weitgehend in der einschlägigen Literatur beschrieben, siehe z.B. [MaaKli1981]. Mit steigender Zylinderzahl wächst jedoch die Anzahl an kombinatorisch möglichen Zündfolgen bzw. Kurbelsternen überproportional, während gleichzeitig die Schwingungsdynamik der Kurbelwelle sowie des gesamten Hubkolbenmotors wesentlich komplexer wird. Daher erfordert die Auswahl einer geeigneten Zündfolge für vielzylindrige Hubkolbenmotoren ein tiefgehendes Verständnis sowohl der Mechanik und Schwingungsdynamik, als auch der Ladungswechseldynamik. Die systematische Bewertung erfolgt heute mehr und mehr anhand von computergestützter Simulation und Optimierungsmethodik [KnoMal2010, Hen2014a, Hen2014b, BucLau2014, PriOva2014].

Es existiert bereits eine Reihe an Patenten zu Zündfolgen. Die US 2,740,389 beschäftigt sich dabei mit den Auswirkungen von Zündfolgen auf den Luftpfad bei Verbrennungsmotoren mit einer Mehrzahl an Zylindern. Die US 7,979,193 befasst sich mit den Zündfolgen eines V12 Hubkolbenmotors in V 90°-Bauweise. Die EP 1 793 104 B9 zeigt eine Reihe vorteilhafter Zündfolgen für einen 15-Zylinder-Hubkolbenmotor in Reihenbauweise. Für einen V16-Motor liegen dagegen noch keine Erkenntnisse vor.

Aufgabe der vorliegenden Erfindung ist es daher, einen Viertakt-Hubkolbenmotor in V-Bauweise mit 16 Zylindern zur Verfügung zu stellen, welcher im Hinblick auf die oben genannten Faktoren gute Eigenschaften aufweist.

Diese Aufgabe wird durch einen Viertakt-Hubkolbenmotor gemäß einem der Ansprüche 1 oder 2 gelöst. Vorteilhafte Ausgestaltungen der vorliegenden Erfindung sind Gegenstand der Unteransprüche.

Die vorliegende Erfindung beschäftigt sich mit optimierten Zündfolgen für einen Viertakt-Hubkolbenmotor in V-Bauweise mit 16 Zylindern. Da die optimalen Zündfolgen von der Drehrichtung des Viertakt-Hubkolbenmotor abhängen, umfasst die vorliegende Erfindung zwei Varianten.

In einer ersten Variante des ersten Aspektes umfasst die vorliegende Erfindung einen Viertakt-Hubkolbenmotor in V-Bauweise mit 16 Zylindern, mit Drehrichtung entgegen dem Uhrzeigersinn. Der Viertakt-Hubkolbenmotor weist eine Zündzeitpunktsteuerung auf, welche die Zylinder A1 bis A8 und B1 bis B8 des Viertakt-Hubkolbenmotors in einer der folgenden Zündfolgen zündet, wobei die Drehrichtung sowie die Zylindernummerierung nach DIN ISO 1204 definiert sind:

a) A1-B2-A5-B4-A7-B8-A3-A8-B5-A6-B7-A2-B3-A4-B1-B6

b) A1-B2-A5-A2-B3-A4-B1-A8-B5-A6-B7-B4-A7-B8-A3-B6

c) A1-B4-A3-B2-A7-B6-A5-B8-B3-A8-B7-A4-B5-A2-B1-A6

d) A1-B4-A3-B2-B5-A2-B1-A6-B3-A8-B7-A4-A7-B6-A5-B8

e) A1-B2-A6-B4-A8-A4-B1-A7-B6-A5-B8-A2-B3-B7-A3-B5

f) A1-B2-A6-B4-A8-B7-A3-A7-B6-A5-B8-A2-B3-A4-B1-B5

g) A1-B2-A6-A2-B3-A4-B1-A7-B6-A5-B8-B4-A8-B7-A3-B5

h) A1-B4-A3-B2-A8-B5-A6-B7-B3-A7-B8-A4-B6-A2-B1-A5

i) A1-B4-B8-A4-B6-A2-B1-A5-B3-A7-A3-B2-A8-B5-A6-B7

j) A1-B4-A3-B2-B6-A2-B1-A5-B3-A7-B8-A4-A8-B5-A6-B7

k) A1-B2-A6-B5-A8-A5-B1-A7-B6-A4-B8-A2-B3-B7-A3-B4

l) A1-B2-A6-B5-A8-B7-A3-A7-B6-A4-B8-A2-B3-A5-B1-B4

m) A1-B2-A6-A2-B3-A5-B1-A7-B6-A4-B8-B5-A8-B7-A3-B4

n) A1-B5-A3-B2-A8-B4-A6-B7-B3-A7-B8-A5-B6-A2-B1-A4

o) A1-B5-B8-A5-B6-A2-B1-A4-B3-A7-A3-B2-A8-B4-A6-B7

p) A1-B5-A3-B2-B6-A2-B1-A4-B3-A7-B8-A5-A8-B4-A6-B7.

Besonders bevorzugt sind dabei die Zündfolgen a) bis j), weiterhin bevorzugt a) bis d).

In einer zweiten Variante des ersten Aspektes umfasst die vorliegende Erfindung einen Viertakt-Hubkolbenmotor in V-Bauweise mit 16 Zylindern, mit Drehrichtung mit dem Uhrzeigersinn. Der Viertakt-Hubkolbenmotor weist eine Zündzeitpunktsteuerung auf, welche die Zylinder A1 bis A8 und B1 bis B8 des Viertakt-Hubkolbenmotors in einer der folgenden Zündfolgen zündet, wobei die Drehrichtung sowie die Zylindernummerierung nach DIN ISO 1204 definiert sind:

a)   A1-A6-B1-A2-B5-A4-B7-A8-B3-B8-A5-B6-A7-B2-A3-B4

b)   A1-B8-A5-B6-A7-A4-B7-A8-B3-A6-B1-A2-B5-B2-A3-B4

c)   A1-B6-B1-A4-B3-A2-B7-A6-B5-A8-A3-B8-A7-B4-A5-B2

d)   A1-B6-A3-B8-A7-B4-B7-A6-B5-A8-B1-A4-B3-A2-A5-B2

e)   A1-B7-A6-B5-A8-B2-A3-A7-B3-A5-B1-A2-B6-A4-B8-B4

f) A1-A5-B1-A2-B6-A4-B8-A7-B3-B7-A6-B5-A8-B2-A3-B4

g)   A1-B7-A6-B5-A8-A4-B8-A7-B3-A5-B1-A2-B6-B2-A3-B4

h)   A1-B5-B1-A4-B3-A2-B8-A5-B6-A7-A3-B7-A8-B4-A6-B2

i) A1-B5-A3-B7-B3-A2-B8-A5-B6-A7-B1-A4-A8-B4-A6-B2

j) A1-B5-A3-B7-A8-B4-B8-A5-B6-A7-B1-A4-B3-A2-A6-B2

k)   A1-B7-A6-B4-A8-B2-A3-A7-B3-A4-B1-A2-B6-A5-B8-B5

l) A1-A4-B1-A2-B6-A5-B8-A7-B3-B7-A6-B4-A8-B2-A3-B5

m)   A1-B7-A6-B4-A8-A5-B8-A7-B3-A4-B1-A2-B6-B2-A3-B5

n)   A1-B4-B1-A5-B3-A2-B8-A4-B6-A7-A3-B7-A8-B5-A6-B2

o)   A1-B4-A3-B7-B3-A2-B8-A4-B6-A7-B1-A5-A8-B5-A6-B2

p)   A1-B4-A3-B7-A8-B5-B8-A4-B6-A7-B1-A5-B3-A2-A6-B2.

Besonders bevorzugt sind dabei die Zündfolgen a) bis j), weiterhin bevorzugt a) bis d).

Die Erfinder der vorliegenden Erfindung haben dabei auf Grundlage einer computergestützten Simulation und Optimierungsmethode und durch eine systematische Bewertung der für die Auswahl einer geeigneten Zündfolge für V16-Hubkolbenmotoren relevanten Mechanik, Schwingungsdynamik und Ladungswechseldynamik erkannt, dass die erfindungsgemäß beanspruchten Zündfolgen für Viertakt-Hubkolbenmotoren in V-Bauweise mit 16 Zylindern besonders vorteilhafte Eigenschaften bezüglich der Torsionsschwingungen der Kurbelwelle, der Ladungswechseldynamik, der Belastung der Kurbelwellenlagerung sowie der Betriebsschwingungen aufweisen.

Durch die verringerte Belastung der Kurbellwelle und der Kurbelwellenlagerung sowie die Verringerung der Betriebsschwingungen wird die Dauerfestigkeit und damit die Lebensdauer des Motors erhöht. Weiterhin kann der konstruktive Aufwand für den Motor und die Anbindung an weitere Komponenten verringert werden. Die durch die optimierten Zündfolgen erreichte geringe Torsionsbelastung der Kurbelwelle kann es weiterhin ermöglichen, auf kostengünstige Kurbelwellenwerkstoffe zurückzugreifen. Weiterhin kann die Verringerung der Torsionsschwingungen den Einsatz eines kleinbauenden und einfach aufgebauten Drehschwingungsdämpfers erlauben. Beides stellt einen erheblichen Kostenvorteil in der Serienfertigung dar. Die erfindungsgemäßen Motoren können dabei für verschiedenartigste Einsatzgebiete verwendet werden.

Die erfindungsgemäßen Viertakt-Hubkolbenmotoren in V-Bauweise mit 16 Zylindern, sowohl jene mit Drehrichtung entgegen als auch mit dem Uhrzeigersinn, weisen bevorzugt eine Kurbelwelle und ein auf der Kurbelwelle angeordnetes Schwungrad auf.

Bevorzugt weist die Kurbelwelle Kröpfungen auf, an welchen die Pleuel der Zylinder angreifen, wobei die Pleuel eines V-Segmentes des Viertakt-Hubkolbenmotors jeweils an einer gemeinsamen Kröpfung angreifen. Die Kröpfungen der Kurbelwelle bilden dabei einen sogenannten Kurbelstern.

In einer möglichen Ausgestaltung der Erfindung weisen die Kröpfungen von der Schwungradseite aus gesehen in Drehrichtung die folgenden Abfolgen auf, wobei die Kröpfungen von der Schwungradseite beginnend mit C1 bis C8 durchnummeriert sind:

i) C1-C8-C3-C4-C7-C2-C5-C6
v) C1-C7-C3-C5-C8-C2-C6-C4.

Ein Viertakt-Hubkolbenmotor in V-Bauweise mit 16 Zylindern mit einem der beiden aufgeführten Kurbelsternen ist als solcher aus dem Stand der Technik bekannt. Nicht bekannt ist jedoch die Verwendung einer erfindungsgemäßen Zündfolge mit einem solchen Kurbelstern.

Bevorzugt werden dabei die folgenden Kombinationen aus Kurbelstern und Zündfolge eingesetzt:

-   Kurbelstern i), eine der Zündfolgen a, b.
-   Kurbelstern v), eine der Zündfolgen k, l, m.

Weiterhin beschäftigt sich die vorliegende Erfindung mit der Ausgestaltung des Kurbelsterns des Viertakt-Hubkolbenmotors, d. h. der Anordnung der Kröpfungen entlang der Kurbelwelle.

Die vorliegende Erfindung umfasst daher in einem bevorzugten Aspekt einen erfindungsgemäßen Viertakt-Hubkolbenmotor in V-Bauweise mit 16 Zylindern, wobei die Drehrichtung sowohl entgegen als auch mit dem Uhrzeigersinn gerichtet sein kann. Der Motor weist eine Kurbelwelle und ein auf der Kurbelwelle angeordnetes Schwungrad auf. Die Kurbelwelle weist Kröpfungen auf, an welchen die Pleuel der Zylinder angreifen, wobei die Pleuel eines V-Segmentes des Viertakt-Hubkolbenmotors jeweils an einer gemeinsamen Kröpfung angreifen. Die Kröpfungen der Kurbelwelle bilden dabei einen sogenannten Kurbelstern. Erfindungsgemäß weisen die Kröpfungen von der Schwungradseite aus gesehen in Drehrichtung eine der folgenden Abfolgen auf, wobei die Kröpfungen von der Schwungradseite beginnend mit C1 bis C8 durchnummeriert sind:

ii) C1-C6-C5-C2-C7-C4-C3-C8
iii) C1-C7-C3-C4-C8-C2-C6-C5
iv) C1-C5-C6-C2-C8-C4-C3-C7
vi) C1-C4-C6-C2-C8-C5-C3-C7.

Viertakt-Hubkolbenmotoren in V-Bauweise mit 16 Zylindern mit solchen Kurbelsternen sind aus dem Stand der Technik nicht bekannt. Die Erfinder der vorliegenden Erfindung haben dabei berücksichtigt, dass auch der Aufbau des Kurbelsterns und insbesondere die Abfolge der einzelnen Kröpfungen entlang der Kurbelwelle erheblichen Einfluss auf die Schwingungsdynamik der Kurbelwelle und des Motors haben. Die Erfinder haben dabei auf Grundlage einer computergestützten Simulation und Optimierungsmethode und durch eine systematische Bewertung der für die Auswahl eines geeigneten Kurbelsterns relevanten Mechanik und Schwingungsdynamik jene Kurbelsterne ermittelt, welche im Hinblick auf die Schwingungseigenschaften besonders gute Eigenschaften aufweisen.

Besonders bevorzugt wird dabei eine der folgenden Kombinationen aus Kurbelstern und Zündfolge eingesetzt:

- Kurbelstern i), eine der Zündfolgen a, b
- Kurbelstern ii), eine der Zündfolgen c, d
- Kurbelstern iii), eine der Zündfolgen e, f, g
- Kurbelstern iv), eine der Zündfolgen h, i, j
- Kurbelstern v), eine der Zündfolgen k, l, m,
- Kurbelstern vi), eine der Zündfolgen n, o, p.

Die Erfinder der vorliegenden Erfindung haben dabei erkannt, dass durch eine solche Abstimmung von Kurbelstern und Zündfolge besonders gute Ergebnisse erreicht werden können.

Weitere bevorzugte Ausgestaltungen der vorliegenden Erfindung werden im Folgenden näher erläutert.

Im Rahmen der vorliegenden Erfindung kann der V-Winkel des Viertakt-Hubkolbenmotors zwischen 67,5° und 112,5° betragen. Die Erfinder der vorliegenden Erfindung haben dabei erkannt, dass auch der V-Winkel einen Einfluss auf die oben genannten, zu optimierenden Aspekte aufweist. Weiterhin besteht eine gewisse Wechselwirkung zwischen den Zündfolgen bzw. Kurbelsternen und dem V-Winkel.

Bevorzugt beträgt der V-Winkel dabei zwischen 80° und 100°, weiter bevorzugt zwischen 85° und 95°, weiter bevorzugt zwischen 87° und 92°, und weiter bevorzugt zwischen 89° und 91°. Besonders bevorzugt beträgt der V-Winkel dabei 90°. Die Erfinder der vorliegenden Erfindung haben dabei erkannt, dass bei einem V-Winkel von 90° eine für die Schwingungsdynamik und Laufruhe des Motors besonders günstige Anordnung vorliegt. Weiterhin ergeben die erfindungsgemäßen Zündfolgen und Kurbelsterne hier besonders gute Ergebnisse. Gewisse Abweichungen des V-Winkels von diesem optimalen Wert sind jedoch möglich.

Besonders bevorzugt wird die vorliegende Erfindung mit Zündfolgen bzw. Kurbelsternen eingesetzt, welche äquidistant oder zumindest quasi-äquidistant ausgestaltet sind. Dies hat wiederum Vorteile für die Laufruhe, die Schwingungsdynamik und die Belastungen.

Bevorzugt weisen die Zündfolgen dabei einen äquidistanten oder quasi-äquidistanten Zündabstand auf. Quasi-äquidistant bedeutet dabei, dass die Zündfolge zwar im Wesentlichen äquidistant ist, aber gewisse Abweichungen von einem äquidistanten Zündabstand zugelassen werden. Bevorzugt beträgt der Zündabstand zwischen zwei aufeinanderfolgenden Zündungen dabei bei einer erfindungsgemäßen äquidistanten oder quasi-äquidistanten Ausgestaltung zwischen 40° und 50°. Weiter bevorzugt beträgt der Zündabstand zwischen 42° und 48°, weiter bevorzugt zwischen 44° und 46°. Weiterhin bevorzugt beträgt der Zündabstand zwischen zwei aufeinanderfolgenden Zündungen dabei 45°, sodass ein äquidistanter Zündabstand gegeben ist. Der Zündabstand von 45° ergibt sich dabei dadurch, dass jeder der sechzehn Zylinder im Rahmen von zwei Umdrehungen des Viertakt-Hubkolbenmotors einmal zündet.

Weiterhin bevorzugt weist die Kurbelwelle acht Kröpfungen auf, an welchen die Pleuel der Zylinder angreifen, wobei die Pleuel eines V-Segmentes des Viertakt-Hubkolbenmotors jeweils an einer gemeinsamen Kröpfung angreifen. Die Kröpfungen bilden dabei einen Kurbelstern. Eine solche Ausgestaltung der Kurbelwelle ist dabei herstellungstechnisch von Vorteil.

Bevorzugt wird dabei ein einfacher Kurbelstern eingesetzt, bei welchem keine der Kröpfungen die gleiche Winkelposition aufweist.

Bevorzugt sind die Kröpfungen dabei äquidistant oder quasi-äquidistant verteilt. Eine quasi-äquidistante Verteilung bedeutet dabei, dass die Verteilung im Wesentlichen äquidistant ist, gewisse Abweichungen von einer äquidistanten Verteilung aber zulässig sind. Bevorzugt beträgt der Winkelabstand zwischen im Winkel aufeinanderfolgenden Kröpfungen bei der erfindungsgemäßen äquidistanten oder quasi-äquidistanten Verteilung dabei zwischen 40° und 50°, weiter bevorzugt zwischen 42° und 48°, weiter bevorzugt zwischen 44° und 46°. Besonders bevorzugt beträgt der Winkelabstand 45°, sodass Äquidistanz vorliegt. Erfindungsgemäß sind die Kröpfungen damit gleichmäßig bzw. im Wesentlichen gleichmäßig über den Winkelbereich von 360° verteilt.

Der erfindungsgemäße Viertakt-Hubkolbenmotor weist bevorzugt einen Drehschwingungsdämpfer auf, welcher die Torsionsschwingungen der Kurbelwelle dämpft. Durch die erfindungsgemäße Ausgestaltung des Viertakt-Hubkolbenmotors werden die Torsionsschwingungen reduziert, so dass die notwendige Verlustleistung des Drehschwingungsdämpfers gegenüber bekannten Viertakt-Hubkolbenmotoren verringert werden kann. Bevorzugt beträgt die Verlustleistung des Drehschwingungsdämpfers dabei weniger als 6 ‰ der maximalen Motorleistung, weiterhin bevorzugt weniger als 5 ‰, weiter bevorzugt weniger als 3,5 ‰, und weiter bevorzugt weniger als 2,5 ‰ der maximalen Motorleistung. Durch die erfindungsgemäß verringerte notwendige Verlustleistung des Drehschwingungsdämpfers ist es zudem möglich, günstige und technisch weniger aufwendige Schwingungsdämpfer einzusetzen.

Erfindungsgemäß kann dabei insbesondere ein Viskoseöl-Drehschwingungsdämpfer eingesetzt werden. Dieser ist im Vergleich zu Blattfederdämpfern erheblich kostengünstiger. Der Einsatz eines Blattfederdämpfers ist erfindungsgemäß jedoch selbstverständlich je nach Anwendungszweck ebenfalls möglich.

Der erfindungsgemäße Viertakt-Hubkolbenmotor weist eine Kurbelwelle und ein auf der Kurbelwelle angeordnetes Schwungrad auf. Der Abtrieb erfolgt dabei auf der Seite des Schwungrades, welche üblicherweise direkt oder über eine Kupplung mit einer Welle verbunden wird, welche einen Verbraucher antreibt. Bevorzugt ist dabei der Drehschwingungsdämpfer auf der dem Schwungrad gegenüberliegenden freien Seite der Kurbelwelle angeordnet. Besonders bevorzugt ist der Drehschwingungsdämpfer dabei außerhalb des Motorgehäuses angeordnet.

Die erfindungsgemäß verringerten Belastungen können es je nach Anwendung erlauben, die Kurbelwelle aus einem kostengünstigeren Stahl zu fertigen. Bevorzugt ist die Kurbelwelle dabei aus einem ausscheidungshärtenden ferritisch-perlitischen Stahl (AFP Stahl) gefertigt. Solche Kurbelwellen sind bereits aus dem Kfz-Bereich bekannt, in welchem die Motoren jedoch erheblich geringeren Belastungen ausgesetzt sind bzw. eine erheblich geringere Lebensdauer aufweisen müssen. Für die erfindungsgemäßen V16-Motoren wird durch die vorliegende Erfindung jedoch ebenfalls der Einsatz eines solchen kostengünstigeren Stahles anstelle des sonst üblichen Vergütungsstahls möglich.

Viertakt-Hubkolbenmotoren gemäß der vorliegenden Erfindung können in einer Vielzahl von unterschiedlichen Ausgestaltungen und Dimensionierungen eingesetzt werden.

In einer möglichen Ausführungsform der vorliegenden Erfindung beträgt der Hubraum pro Zylinder zwischen 1 l und 10 l, bevorzugt zwischen 1,5 l und 5 l, weiter bevorzugt zwischen 2 l und 3 l.

Weiterhin bevorzugt beträgt die Maximalleistung des Motors pro Liter Hubraum zwischen 10 kW und 80 kW, weiterhin bevorzugt zwischen 20 kW und 60 kW.

Weiterhin kann der Motor in einem Drehzahlbereich betreibbar sein, welcher zwischen 400 und 3.000 U/min liegt. Insbesondere kann der Motor dabei in einem Drehzahlbereich zwischen 600 und 2.100 U/min betreibbar sind. Der tatsächlich für eine Anwendung genutzte Drehzahlbereich eines konkreten erfindungsgemäßen Viertakt-Hubkolbenmotors kann dabei einen Teilbereich dieser Drehzahlbereiche ausmachen.

Bevorzugt weist der Motor eine Motordrehzahl-Steuerung auf, welche den Motor mit einer Soll-Motordrehzahl betreibt. Bevorzugt wird der Motor dabei so angesteuert, dass der Motor nach kurzfristigen Lastwechseln, welche die tatsächliche Motordrehzahl von der Soll-Motordrehzahl abweichen lassen, wieder die Soll-Motordrehzahl erreicht. In einer möglichen Ausführungsform kann die Soll-Motordrehzahl dabei konstant gehalten werden. Insbesondere ist die Soll-Motordrehzahl dabei bevorzugt über Zeiträume, welche gegenüber den typischen Lastwechseln lang sind, konstant. Erfindungsgemäß kann die Motorsteuerung jedoch so ausgeführt sein, dass die Soll-Motordrehzahl an wechselnde Motor- und / oder Lastbedingungen anpassbar ist. Insbesondere kann die Soll-Motordrehzahl dabei zur Anpassung langsam nachgeführt werden.

Der erfindungsgemäße Motor kann jedoch auch mit beliebigen anderen Motorsteuerungs-Prinzipien betrieben werden.

Die erfindungsgemäße Ausgestaltung des Viertakt-Hubkolbenmotors kann mit einer Vielzahl von unterschiedlichen konstruktiven Ausgestaltungen des Motors kombiniert werden.

Bevorzugt weist der erfindungsgemäße Motor für die beiden Zylinderbänke getrennte Ansaug- und / oder Abgasführungen auf. Weiterhin kann der Motor für die beiden Zylinderbänke getrennte Ansaug- und / oder Abgassysteme aufweisen.

Bei dem erfindungsgemäßen Motor kann es sich um einen Gasmotor handeln. In diesem Fall ist der Motor mit einem gasförmigen Kraftstoff, wie beispielsweise Wasserstoff, Erdgas, Biogas und / oder Autogas, betreibbar.

Alternativ oder zusätzlich kann der Motor auch mit einem flüssigen Kraftstoff betreibbar seien. Beispielsweise kann der Motor dabei mit Diesel und / oder Benzin betreibbar sein.

In einer möglichen Ausführungsform kann der erfindungsgemäße Motor dabei nur mit einem gasförmigen Kraftstoff, oder nur mit einem flüssigen Kraftstoff betreibbar sein. Alternativ ist jedoch auch ein Betrieb sowohl mit einem gasförmigen, als auch mit einem flüssigen Kraftstoff denkbar.

Der erfindungsgemäße Motor kann eine Direkteinspritzung aufweisen. Weiterhin kann der Motor eine Hochdruckeinspritzung aufweisen. Besonders bevorzugt kommen diese Einspritzungen bei einem Motor zum Einsatz, welcher mit flüssigem Kraftstoff betreibbar ist.

Der erfindungsgemäße Motor kann mit einem Diesel- oder mit einem Ottoverbrennungsverfahren betreibbar sein.

Weiterhin kann die Motorsteuerung so ausgestaltet sein, dass der Motor mit auf einem homogenen, einem geschichteten und / oder einem alternativen Verbrennungsverfahren arbeitet. Gegebenenfalls kann dabei auch je nach Motor- und / oder Lastbedingungen eines von mehreren Verbrennungsverfahren ausgewählt werden.

Bei dem erfindungsgemäßen Motor kann es sich um einen Saugmotor handeln. Alternativ kann der Motor eine ein- oder mehrstufige Aufladung aufweisen. Insbesondere kann der Motor dabei einen oder mehrere Turbolader und/oder Kompressoren aufweisen.

Ein erfindungsgemäßer Viertakt-Hubkolbenmotor kann in einer Vielzahl von unterschiedlichen Anwendungen zum Einsatz kommen. Einige bevorzugte Anwendungen werden im Folgenden näher beschrieben: Der erfindungsgemäße Motor kann als Antrieb in einer Schwerlast- und / oder Bergbaumaschine eingesetzt werden. Weiterhin ist der Einsatz in einer Erdbewegungs- und / oder Transport- und / oder Umschlagmaschine denkbar. In einer möglichen Anwendung kann der Motor dabei einen Generator oder eine Hydraulikpumpe antreiben, über welchen ein Fahrwerk und / oder Arbeitsaggregate der Schwerlast- und / oder Bergbau- und / oder Erdbewegungs- und / oder Transport- und / oder Umschlagmaschine angetrieben werden. Alternativ kann der Motor ein Fahrwerk und/oder Arbeits-Aggregate der Schwerlast- und/oder Bergbau- und/oder Erdbewegungs- und/oder Transport- und/oder Umschlagmaschine direkt oder über ein Getriebe antreiben, welches bevorzugt mittels einer mechanischen Schaltkupplung und/oder einer Wandlerkupplung mit dem Motor in Verbindung steht.

Der Einsatz ist dabei sowohl für Bergbaumaschinen für den Untertagebau, als auch bei Bergbaumaschinen für den Tagebau denkbar. Bei der Schwerlast- und / oder Bergbaumaschine kann es sich sowohl um eine stationäre, als auch um eine mobile Maschine handeln. Handelt es sich um eine mobile Maschine, wird bevorzugt zumindest das Fahrwerk über den erfindungsgemäßen Motor angetrieben.

Mögliche Einsatzgebiete eines erfindungsgemäßen Motors sind dabei insbesondere als Antrieb bei einem Muldenkipper oder Bagger.

Ein weiterer Anwendungsfall des erfindungsgemäßen Motors ist als Hauptantrieb für ein Schiff. Bevorzugt treibt die Kurbelwelle dabei die Schiffsschraube des Schiffes an. Dabei kann die Welle der Schiffsschraube unmittelbar oder über eine Kupplung und/oder ein Getriebe mit dem Schwungrad des Motors verbunden sein.

Ein weiterer Anwendungsbereich des erfindungsgemäßen Motors besteht als Hauptantrieb in schweren militärischen Anwendungen. Insbesondere kann der Motor dabei als Hauptantrieb in einem Panzerfahrzeug und / oder einem Raketenträger und / oder einem Schnellboot und / oder einem U-Boot eingesetzt werden.

Weiterhin kann der erfindungsgemäße Motor als Hauptantrieb in einem Schienenfahrzeug eingesetzt werden. Insbesondere kann das Schienenfahrzeug dabei dieselelektrisch betrieben werden. Alternativ kann der Antrieb über ein Getriebe erfolgen, welches weiter bevorzugt mittels einer Schaltkupplung und/oder einer Wandlerkupplung mit dem Motor in Verbindung steht.

Weiterhin kann der erfindungsgemäße Motor als Antrieb in der Fluidförderungstechnik und / oder der Öl- und Gasindustrie eingesetzt werden. Beispielsweise kann der Motor dabei als Antrieb einer Pumpe und / oder einer Öl- und / oder Gasfördermaschine, einer Öl- und / oder Gastransportmaschine und / oder einer Öl- und / oder Gasverarbeitungsmaschine eingesetzt werden.

Der erfindungsgemäße Motor kann für die stationäre oder mobile Stromerzeugung eingesetzt werden.

In einer möglichen Anwendung kann die Last torsionssteif mit der Kurbelwelle verbunden sein. Alternativ kann die Last jedoch auch über eine drehelastische Kupplung mit der Kurbelwelle verbunden sein. Eine solche drehelastische Kupplung absorbiert dabei in einem gewissen Umfang Torsionsschwingungen und reduziert damit die Übertragung von noch vorhandenen Torsionsschwingungen der Kurbelwelle auf die angetriebene Last.

Die vorliegende Erfindung stellt damit insbesondere die Verwendung eines erfindungsgemäßen Viertakt-Hubkolbenmotors für eine der oben genannten Anwendungen unter Schutz.

Die vorliegende Erfindung umfasst weiterhin eine Maschine mit einem erfindungsgemäßen Viertakt-Hubkolbenmotor. Insbesondere wird der Viertakt-Hubkolbenmotor dabei zum Antrieb der Maschine oder eines Aggregats der Maschine eingesetzt. Bei der erfindungsgemäßen Maschine kann es sich dabei sowohl um eine stationäre Maschine, als auch um eine mobile Maschine handeln.

Insbesondere handelt es sich bei der erfindungsgemäßen Maschine um eine der oben genannten Anwendungen. Beispielsweise kann es sich bei der erfindungsgemäßen Maschine um eine Schwerlast- und / oder Bergbau- und / oder Erdbewegungs- und / oder Transport- und / oder Umschlagmaschine, ein Schiff, ein Schienenfahrzeug, eine schwere militärische Maschine, eine Fluidfördermaschine, eine Öl- und / oder Gasfördermaschine, eine Öl- und / oder Gastransportmaschine und / oder eine Öl- und / oder Gasverarbeitungsmaschine und / oder ein Stromerzeugungsaggregat handeln. Insbesondere kann die Maschine dabei so ausgestaltet sein, wie dies oben im Hinblick auf die erfindungsgemäßen Anwendungen näher dargestellt wurde. Der erfindungsgemäße Motor kann so ausgestaltet sein, wie dies oben näher dargestellt wurde.

Die vorliegende Erfindung umfasst weiterhin eine Zündzeitpunktsteuerung oder eine Software für eine Zündzeitpunktsteuerung für einen Viertakt-Hubkolbenmotor mit 16 Zylindern. Die Zündzeitpunktsteuerung bzw. die Software implementieren dabei mindestens eine der oben im Hinblick auf den ersten Aspekt angegebenen Zündfolgen. Bei der Zündzeitpunktsteuerung kann es sich dabei um eine durch den konstruktiven Aufbau des Motors vorgegebene Zündzeitpunktsteuerung handeln, beispielsweise über mechanisch über eine Nockenwelle angetriebene Zündzeitpunktsteuerung. Alternativ kann es sich jedoch auch um eine elektronisch angesteuerte Zündzeitpunktsteuerung handeln. Bevorzugt implementiert die Zündzeitpunktsteuerung oder Software dabei einen Betrieb des Viertakt-Hubkolbenmotors, wie er oben näher dargestellt wurde, und/oder kann bei einem Viertakt-Hubkolbenmotor eingesetzt werden, welcher so ausgestaltet ist und/oder so betrieben wird, wie dies oben näher dargestellt wurde.

Die vorliegende Erfindung umfasst weiterhin ein Verfahren zum Betrieb eines Viertakt-Hubkolbenmotors in V-Bauweise mit 16 Zylindern, wobei die Zylinder mit einer der oben im Hinblick auf den ersten Aspekt näher angegebenen Zündfolgen betrieben werden. Bevorzugt ist der Viertakt-Hubkolbenmotor dabei so ausgestaltet und/oder wird so betrieben, wie dies oben näher dargestellt wurde.

Die vorliegende Erfindung wird nun anhand von Ausführungsbeispielen sowie Zeichnungen näher dargestellt.

Dabei zeigen:

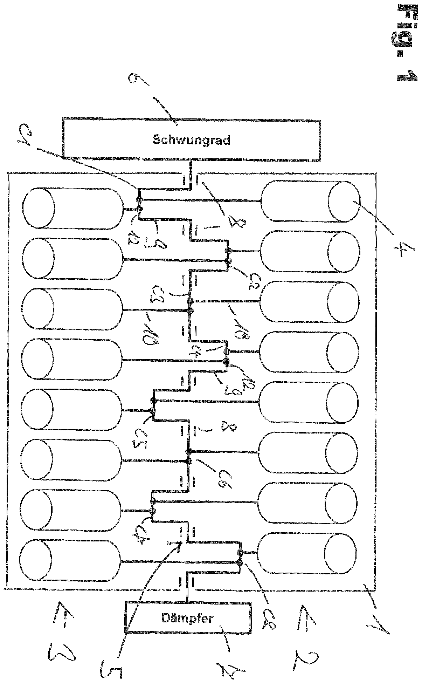

Fig. 1: eine Prinzipdarstellung eines erfindungsgemäßen Viertakt-Hubkolbenmotors,

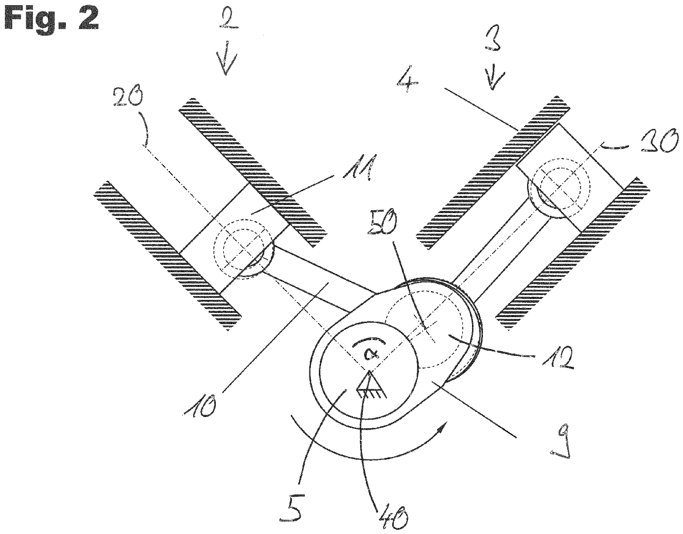

Fig. 2: eine Prinzipdarstellung eines V-Segments eines erfindungsgemäßen Viertakt-Hubkolbenmotors,

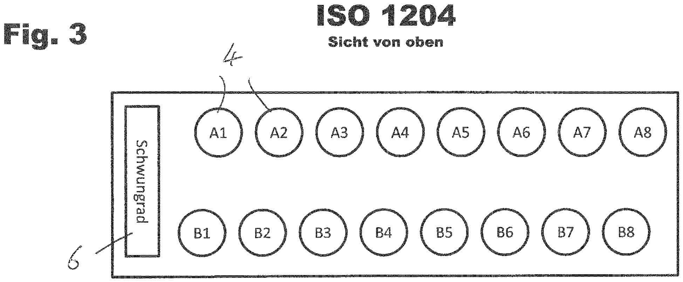

Fig. 3: eine Darstellung der Zylindernummerierung nach DIN ISO 1204, wobei der Motor in einer Draufsicht mit oben liegenden Zylindern und einer unterhalb der Zylinder angeordneten Kurbelwelle dargestellt ist,

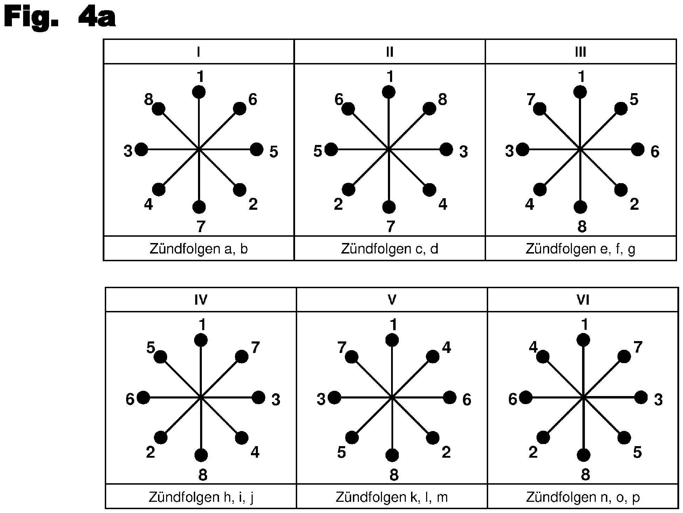

Fig. 4a: erfindungsgemäße Kurbelsterne für einen Viertakt-Hubkolbenmotor mit Drehrichtung entgegen dem Uhrzeigersinn, in einer Darstellung mit Blick von der Schwungradseite auf die Kurbelwelle, wobei die Nummerierung der Kröpfungen auf der Schwungradseite mit 1 beginnt, sowie bevorzugte Zündfolgen zu diesen Kurbelsternen,

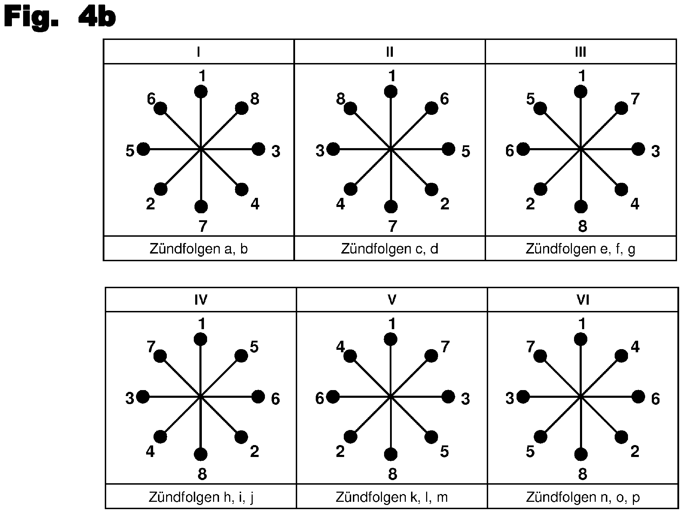

Fig. 4b: erfindungsgemäße Kurbelsterne für einen Viertakt-Hubkolbenmotor mit Drehrichtung mit dem Uhrzeigersinn, in einer Darstellung mit Blick von der Schwungradseite auf die Kurbelwelle, wobei die Nummerierung der Kröpfungen auf der Schwungradseite mit 1 beginnt, sowie bevorzugte Zündfolgen zu diesen Kurbelsternen,

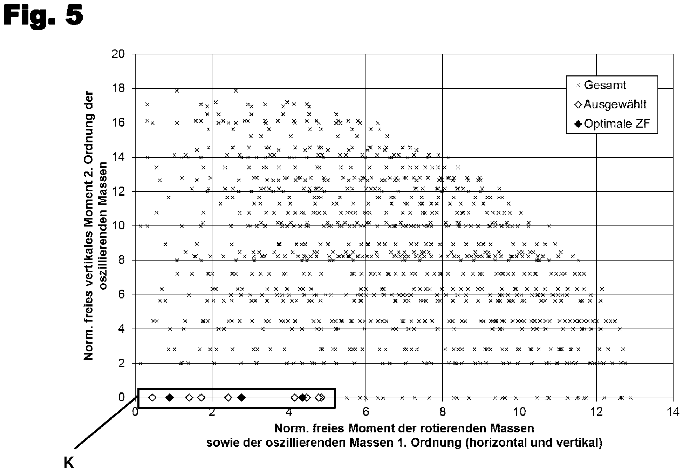

Fig. 5: ein Diagramm, in welchem das normierte freie horizontale und vertikale Moment der rotierenden Massen sowie der oszillierenden Massen erster Ordnung und das normierte freie vertikale Moment zweiter Ordnung der oszillierenden Massen für sämtliche untersuchten Kurbelsterne dargestellt ist, wobei die erfindungsgemäß optimierten Kurbelsterne gekennzeichnet sind,

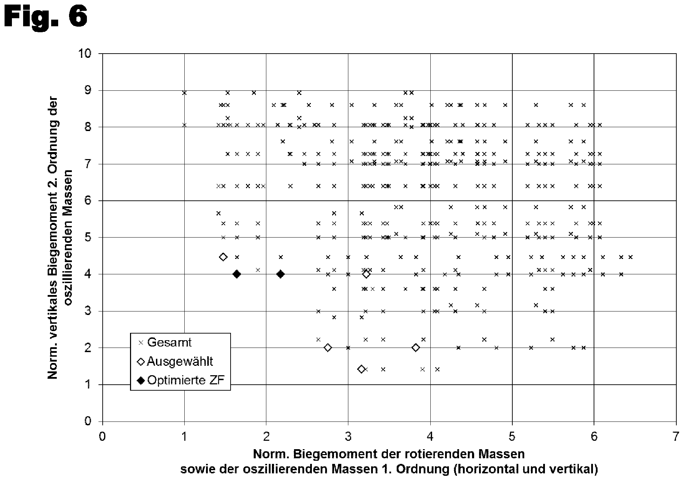

Fig. 6: ein Diagramm, in welchem das normierte horizontale und vertikale Biegemoment der rotierenden Massen sowie der oszillierenden Massen erster Ordnung und das normierte vertikale Biegemoment zweiter Ordnung der oszillierenden Massen für alle untersuchten Kurbelsterne dargestellt ist, wobei die erfindungsgemäß optimierten Kurbelsterne gekennzeichnet sind,

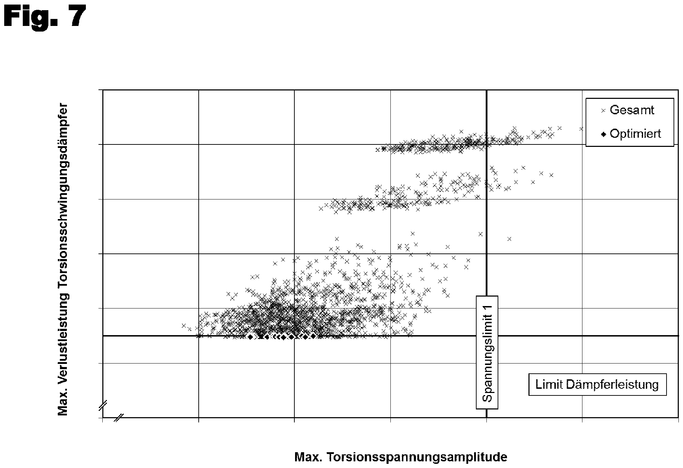

Fig. 7: ein Diagramm, welches die maximale Torsionsspannungsamplitude und die maximale Verlustleistung des Drehschwingungsdämpfers beim Einsatz eines V16-Motors als Antrieb einer Heavy-Duty-Anwendung mit drehelastischer Kupplung für alle untersuchten Zündfolgen darstellt, wobei die erfindungsgemäß optimierten Zündfolgen hervorgehoben sind; weiterhin sind Limits für die Torsionsspannung und die Dämpferverlustleistung eingezeichnet,

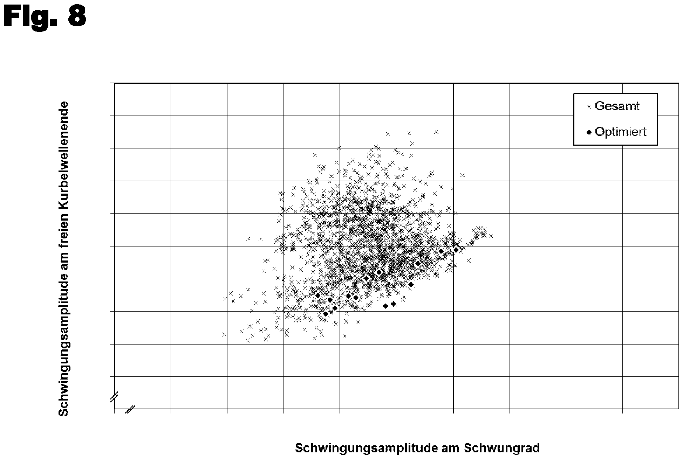

Fig. 8: ein Diagramm, welches die Schwingungsamplituden am Schwungrad und am freien Kurbelwellenende beim Einsatz eines V16-Motors als Antrieb einer Heavy-Duty-Anwendung mit drehelastischer Kupplung für alle untersuchten Zündfolgen darstellt, wobei die erfindungsgemäß optimierten Zündfolgen hervorgehoben sind,

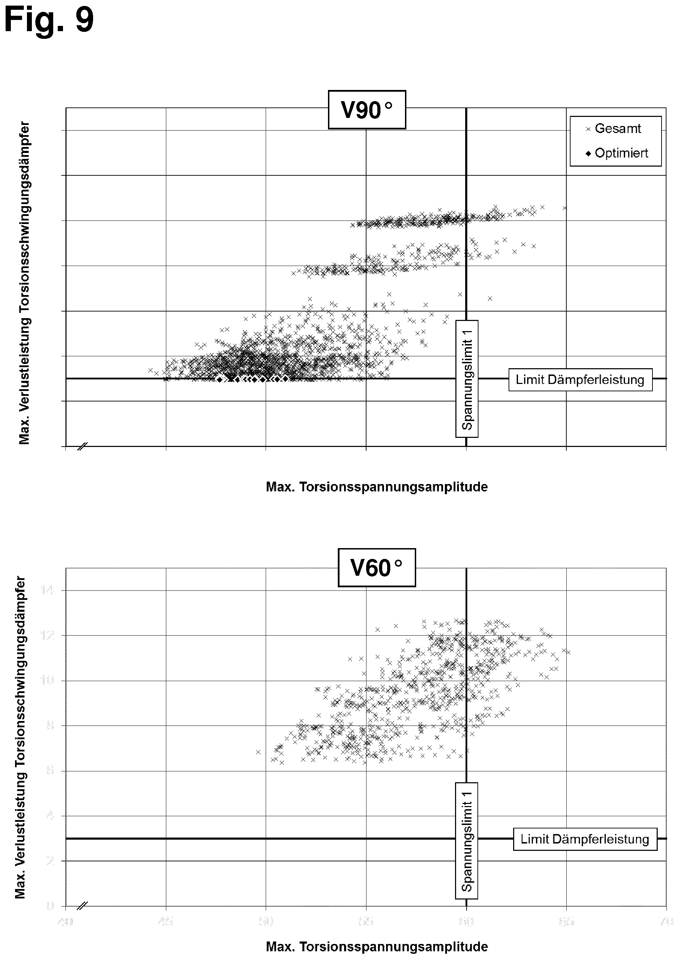

Fig. 9: oben das bereits in Fig. 7 gezeigte, für einen Motor mit einem V-Winkel von 90° und einfachem Kurbelstern erstellte Diagramm, und unten das gleiche Diagramm für einen Motor mit einem V-Winkel von 60° und zentralsymmetrischem Kurbelstern.

Der Aufbau eines erfindungsgemäßen Viertakt-Hubkolbenmotors mit 16 Zylindern ist in der Fig. 1 bis 3 schematisch dargestellt.

Fig. 1 zeigt dabei schematisch das Gehäuse 1 des Motors, in welchem die Zylinder 4 des Motors angeordnet sind. Die durch die Zylinder angetriebene Kurbelwelle 5 ist über Lagerstellen 8 gelagert ist. Gemäß der V-Bauweise sind die Zylinder 4 des Motors in zwei Reihen, den sog. Zylinderbänken 2 und 3, angeordnet.

Innerhalb der jeweiligen Zylinderbänke 2 bzw. 3 sind sämtliche Zylinder parallel zueinander ausgerichtet. Wie aus Fig. 2 ersichtlich, stehen die Hauptachsen 20 der Zylinder der ersten Zylinderbank 2 und die Hauptachsen 30 der Zylinder der zweiten Zylinderbank 3 in einem V-Winkel $\alpha$ aufeinander. In der in Fig. 2 gezeigten Prinzipdarstellung verläuft der Mittelpunkt 40 der Kurbelwelle 5 im Schnittpunkt der Hauptachsen 20 und 30. Alternativ ist der Mittelpunkt 40 gegenüber der Symmetrieebene seitlich versetzt.

Die Kurbelwelle weist dabei Kröpfungen 9 auf, welche einen Kurbelstern bilden. Die Kröpfungen 9 weisen dabei jeweils einen Hupzapfen 12 auf, an welchem das Pleuel mindestens eines Zylinders angreift. Aufgabe der einzelnen Schubkurbeln ist es, die durch den Gasdruck auf den Kolben aufgebrachte Kraft in ein Drehmoment zu wandeln, welches als Nutzmoment über die Kurbelwelle und das Schwungrad 6 auf den Abtrieb übertragen wird. Bei modernen V-Motoren wirken die Kurbeln eines V-Segments meist auf den gleichen Hubzapfen. Im Ausführungsbeispiel greifen daher jeweils die Pleuel 10 gegenüberliegender Zylinder, d. h. die Pleuel eines V-Segments des V-Motors, an einer gemeinsamen Kröpfung bzw. an dem Hubzapfen einer gemeinsamen Kröpfung an. Der Hubzapfen kann dabei auch zweigeteilt sein, um einen gewissen Winkelversatz zu erreichen.

Die Kurbelwelle ist zwischen zwei V-Segmenten und damit zwischen jeweils zwei aufeinanderfolgenden Kröpfungen über Lager 8 am Motorgehäuse gelagert. Durch die Kröpfungen 9 sind die jeweiligen Hubzapfen 12 exzentrisch zur Drehachse 40 der Kurbelwelle angeordnet, sodass die Linearbewegung der Kolben 11 in den Zylindern 4 in eine Rotationsbewegung der Kurbelwelle 5 übersetzt wird.

Wie in Fig. 1 dargestellt, ist an dem einen Ende der Kurbelwelle das Schwungrad 6 angeordnet, am anderen freien Ende üblicherweise ein Drehschwingungsdämpfer 7. Bei dem Drehschwingungsdämpfer 7 kann es sich dabei in einer möglichen Ausführungsform um einen Gummi- oder Blattfederdämpfer handeln. Bevorzugt ist jedoch ein Viskoseöl-Drehschwingungsdämpfer vorgesehen.

Der Drehschwingungsdämpfer 7 ist im Ausführungsbeispiel außerhalb des Gehäuses 1 angeordnet. Wird dabei ein Viskoseöl-Drehschwingungsdämpfer eingesetzt, handelt es sich hierbei um die bevorzugte Anordnung. Insbesondere kann der Dämpfer hierdurch von der Umgebungsluft gekühlt werden. Eine Anordnung des Dämpfers innerhalb des Gehäuses des Motors ist ebenfalls denkbar, insbesondere wenn der Dämpfer über den Motorschmierstoff gekühlt werden soll. Das Schwungrad 6 ist ebenfalls außerhalb des Gehäuses 1 angeordnet.

Am Schwungrad 6 wird üblicherweise der Abtrieb des Motors vorgenommen. Insbesondere wird das Schwungrad dabei in der Regel über eine Kupplung mit einer Welle verschraubt, welche eine vom Motor angetriebene Last antreibt. An dem dem Schwungrad gegenüberliegenden freien Ende der Kurbelwelle können motorinterne Abtriebe vorgesehen sein, beispielsweise ein Räder- oder Riementrieb zum Antrieb einer Wasserpumpe und / oder einer Ölpumpe etc. Zusätzlich kann aber auch eine Leistungsabnahme für die Anwendung am vorderen Kurbelwellenende erfolgen.

In Fig. 1 ist die erfindungsgemäß zur Bezeichnung der einzelnen Kröpfungen 9 verwendete Nomenklatur eingezeichnet, gemäß welcher die Kröpfungen von der Schwungradseite ausgehend mit C1 bis C8 durchnummeriert sind. In Fig. 3 ist die Nummerierung der einzelnen Zylinder gemäß DIN ISO 1204 wiedergegeben, wie sie vorliegend zur Bezeichnung der Zündfolgen eingesetzt wird. Die Zeichnung zeigt dabei den Viertakt-Hubkolbenmotor in einer Draufsicht von oben, wobei das Schwungrad 6 und die Zylinder 4 eingezeichnet sind. Die Kurbelwelle befindet sich dabei unterhalb der Zylinder. Die Drehrichtung wird dabei vorliegend gemäß DIN ISO 1204 in einer Sicht von der Kraftabgabeseite des Motors aus auf die Kurbelwelle definiert, d. h. mit Blick von der Schwungradseite des Motors auf die Kurbelwelle.

Gemäß der vorliegenden Erfindung wurden dabei optimierte Zündfolgen für die Zylinder eines erfindungsgemäßen Hubkolbenmotors ermittelt. Im Hinblick auf die konkreten Zündfolgen wird dabei auf die vorangegangene Darstellung verwiesen. Zur Bezeichnung der Zylinder wurde dabei die in Fig. 3 dargestellte Nomenklatur gemäß DIN ISO 1204 verwendet.

Die erfindungsgemäß ausgewählten optimierten Kurbelsterne, welche ebenfalls bereits beschrieben wurden, sind in Fig. 4a für Motoren mit Drehrichtung entgegen dem Uhrzeigersinn und in Fig. 4b für Motoren mit Drehrichtung mit dem Uhrzeigersinn näher dargestellt. Die Kurbelsterne für die Motoren mit den beiden unterschiedlichen Drehrichtungen haben dabei in Bezug auf die Drehrichtung die gleiche Abfolge der Kröpfungen. In den Figuren ist dabei jeweils der Blick von der Schwungradseite aus auf die Kurbelwelle entlang der Kurbelwellenachse gezeigt. Weiterhin sind die Kröpfungen gemäß der in Fig. 1 dargestellten Nomenklatur angegeben, wobei hier lediglich auf den Buchstaben "C" verzichtet wurde und die Kröpfungen bei 1 beginnend auf der Schwungradseite durchnummeriert wurden, d. h. die in Fig. 4a und 4b dargestellten Kröpfungen 1 bis 8 entsprechen den Kröpfungen C1 bis C8.

Im Ausführungsbeispiel sind die einzelnen Kröpfungen dabei äquidistant angeordnet, d. h. im Drehwinkel aufeinanderfolgende Kröpfungen weisen jeweils einen Drehwinkelabstand von 45° auf. Die vorliegende Erfindung ist jedoch nicht auf eine solche äquidistante Anordnung beschränkt. Bevorzugt ist die Anordnung jedoch zumindest quasi-äquidistant. Bei dem Kurbelstern handelt es sich dabei um einen einfachen Kurbelstern, d. h. es werden keine Kröpfungen mit der gleichen Winkelposition eingesetzt. Im Ausführungsbeispiel sind dabei sämtliche Kröpfungen gleichmäßig um die Drehachse verteilt.

Im Folgenden wird nun näher beschrieben, wie die erfindungsgemäßen Parameter des Viertakt-Hubkolbenmotors, und insbesondere die Zündfolgen und die Kurbelsterne, ermittelt wurden. Im Ausführungsbeispiel liegt dabei eine Kombination des ersten und des zweiten Aspektes der vorliegenden Erfindung vor.

**Grundlegende Aspekte der Optimierung**

Bei Hubkolbenmotoren unterliegt die Kurbelwelle unterschiedlichen Belastungen. Zunächst ist die Biegebelastung der einzelnen Kröpfungen zu nennen, welche durch den Zylinderdruck und die beschleunigten Massen der einzelnen Kurbeltriebe entsteht. Zudem unterliegt die Kurbelwelle einer zeitlich veränderlichen Torsionsbelastung, welche von den Drehmomenten der einzelnen Kurbeltriebe herrührt. Zusätzlich zu diesen quasi-statischen Belastungsarten werden durch den transienten Verlauf der Drehmomente der einzelnen Kurbeltriebe Torsionsschwingungen in der Kurbelwelle angeregt, welche die quasi-statische Torsionsbelastung um ein vielfaches übersteigen kann.

Neben verschiedenen torsionsdynamischen Kriterien sind noch weitere Aspekte bei der Auswahl des V-Winkels, des Kurbelsterns und einer geeigneten Zündfolge zu berücksichtigen. Zu nennen sind hier der Massenausgleich des Kurbeltriebs, die Ladungswechseldynamik, die Belastung der Kurbelwellenlagerung, sowie die Betriebsschwingungen des gesamten Hubkolbenmotors. Für gängige Kurbeltriebkonfigurationen, wie etwa Reihensechszylinder oder V12 Hubkolbenmotoren, ist die Anzahl an möglichen Kurbelsternen und Zündfolgen noch relativ übersichtlich, und die sinnvoll umsetzbaren Zündfolgen sind in der Fachliteratur umfassend beschrieben. Die Anzahl möglicher Zündfolgen steigt im Allgemeinen jedoch stark überproportional zur Anzahl der Zylinder, was die Auswahl einer vorteilhaften Lösung erheblich erschwert. Für die hier behandelten Viertakt-Hubkolbenmotoren liegt die Anzahl kombinatorisch möglicher Zündfolgen bereits in der Grössenordnung von $10^5$. Zudem wird die Verwendung von Optimierungsalgorithmen dadurch erschwert, dass der Optimierungsparameter Zündfolge von diskreter Natur ist, und die Korrelation zwischen Zündfolge und einigen Bewertungskriterien, wie etwa Lagerbelastung und Gaswechseldynamik, starke Unstetigkeiten aufweist.

Die Vielzahl an zu berücksichtigenden Kriterien in Kombination mit der grossen Anzahl möglicher Zündfolgen erfordert die Anwendung von Methoden der Mehrkriterienoptimierung. Die diskrete und partiell unstetige Natur des Optimierungsproblems verbietet dabei die Anwendung rein deterministischer Optimierungsalgorithmen. Eine umfassende Bewertung kann hingegen durch eine vollständige Auswertung der Kriterien für alle Lösungen erreicht werden ("Design of Experiments"). Durch einen hierarchischen Optimierungsansatz kann dabei der Berechnungsaufwand auf ein vernünftiges Mass reduziert werden.

**V-Winkel und grundlegende Kurbelwellentopologie**

Bei der Auswahl des V-Winkels von Kurbeltrieben spielen unterschiedliche Aspekte eine Rolle. Zunächst bestimmt der V-Winkel massgeblich die Höhe und Breite des vom Motor benötigten Bauraums. Des Weiteren werden durch den V-Winkel die Zündabstände des Motors festgelegt, sofern keine geteilten Hubzapfen vorgesehen sind. Diese wiederum haben erheblichen Einfluss sowohl auf die Drehungleichförmigkeit des Schwungrads, als auch die Torsionsdynamik der Kurbelwelle. Darüber hinaus sind die Kräfte in der Kurbelwellenlagerung ebenso vom V-Winkel abhängig, da dieser die Richtungen der Zylinderkräfte definiert, sowie über den Zündabstand den Grad der Superposition der Einzelkräfte in einer Lagerung.

Für die Entwicklung eines robusten Motors mit moderater Torsionsbelastung der Kurbelwelle ist es von Vorteil, eine an die eingesetzte Zylinderzahl angepasste Kurbeltriebkonfiguration zu wählen, die einen äquidistanten Zündabstand aufweist. Neben dem V-Winkel spielt hier die gewählte Kurbelwellentopologie eine wichtige Rolle. Bei modernen schnelllaufenden Viertakt-Hubkolbenmotoren laufen die Pleuel eines V-Segments meist auf einem gemeinsamen Hubzapfen. Bezüglich der Anordnung der Hubzapfen entlang der Kurbelwelle, dem sog. Kurbelstern, sind grundsätzlich zwei Topologien zu unterscheiden. Bei dem sog. einfachen Kurbelstern sind die Hubzapfen gleichmässig über den Winkelbereich von 360° verteilt, so dass sich ein Kurbelsternwinkel von

$$\varphi_K = \frac{2 \cdot 360°}{N_z}$$

ergibt, wobei $N_z$ die Anzahl Zylinder bezeichnet. Für den V16 ergibt sich somit $\varphi_K$=45°. Ein äquidistanter Zündabstand $\varphi_Z$ ergibt sich in diesem Fall, wenn der V-Winkel $\alpha_V$ zu

$$\alpha_V = k \cdot \varphi_K, \qquad \text{mit } k = 1,2 \dots$$

gewählt wird. In diesem Fall ist der Zündabstand gleich dem Kurbelsternwinkel. Für den V16 ergeben sich somit mögliche V-Winkel von $\alpha_V$=45°, 90°, und 135°.

Bei dem sog. doppelten Kurbelstern liegen jeweils zwei Hubzapfen an der gleichen Winkelposition im Kurbelstern. Einen oft anzutreffenden Sonderfall bilden hier die sog. zentralsymmetrischen Kurbelwellen, bei denen die Kröpfungen entlang der Kurbelwelle symmetrisch bezüglich der Kurbelwellenmitte angeordnet sind. Diese bieten ab einer Zylinderzahl von 12 oder mehr den Vorteil, dass keinerlei freie Massenkräfte und -Momente beim Betrieb auftreten. Für doppelte Kurbelsterne gilt folgende Voraussetzung für den Kurbelsternwinkel

$$\varphi_K = \frac{4 \cdot 360°}{N_z}.$$

Für den V16 ergibt sich somit $\varphi_K$=90°. Ein äquidistanter Zündabstand $\varphi_Z$ ergibt sich in diesem Fall, wenn der V-Winkel $\alpha_V$ zu

$$\alpha_V = k \cdot \frac{\varphi_K}{2}, \qquad \text{mit } k = 1,3,5 \dots$$

gewählt wird. In diesem Fall ist der Zündabstand gleich dem halben Kurbelsternwinkel. Für den V16 ergeben sich somit mögliche V-Winkel von $\alpha_V$=45° und 135°.

Bei der Wahl des V-Winkels sind weitere Restriktionen zu beachten. So sind aufgrund des Durchmessers der Zylinderlaufbuchsen nicht beliebig kleine V-Winkel realisierbar, da ansonsten Durchdringungen stattfinden würden. Mit steigendem V-Winkel hingegen ergeben sich immer grössere horizontale Kraftkomponenten in der Kurbelwellenlagerung, was bei der Lagerauslegung berücksichtigt werden muss. V-Winkel grösser als 120° sind kritisch zu bewerten bezüglich der horizontalen Krafteinleitung, da hier die Gefahr besteht, dass zu grosse Belastungen auf die Trennebene der Lagerschalen aufgebracht wird, was zu erhöhtem Verschleiss und Versagen führen kann.

Die für zentralsymmetrische Kurbelsterne günstigen Winkel sind daher aufgrund dieser Überlegungen für den V16 technisch ungünstig.

Bevorzugt wird daher ein V-Winkel von 90° oder dessen Umgebung eingesetzt, sowie ein einfacher Kurbelstern. Die hierdurch erreichbaren Vorteile werden weiter unten mit Bezug auf Fig. 9 näher beschrieben. Rein kombinatorisch ergeben sich für diese Konfiguration 5040 Kurbelsterne mit insgesamt 64'512 möglichen Zündfolgen.

**Auswahl des Kurbelsterns aufgrund der Betrachtung der Kraft- und Momentenwirkung der beschleunigten Massen im Kurbeltriebwerk**

Bei Hubkolbenmotoren treten in erheblichem Masse Kräfte und Momente auf, welche durch die beschleunigten oszillierenden Massen von Kolben und Pleueln sowie durch die rotierenden Massen der Pleuel und der Kurbelwelle verursacht werden. Diese können erhebliche Schwingungen des gesamten Hubkolbenmotors zur Folge haben, und stellen eine zusätzliche Belastung der Lagerung der Kurbelwelle dar.

Dabei spielt die Anordnung der Einzelkröpfungen entlang der Kurbelwelle, der sog. Kurbelstern, eine zentrale Rolle, da dieser die Phasenlage der Massenkräfte der einzelnen Kurbeltriebe vorgibt, und somit die resultierende Wirkung auf den gesamten Hubkolbenmotor bestimmt. Zusätzlich bestimmt der gewählte Kurbelstern die Anzahl und Grösse der an der Kurbelwelle anzubringenden Gegengewichte. Nachdem diese wiederum nennenswerte Massenträgheitsmomente aufweisen, besteht ein direkter Zusammenhang zwischen dem Kurbelstern und der Schwingungscharakteristik des Kurbeltriebs.

Es ist üblich, die Kraft- und Momentenwirkung einer Triebwerkskonfiguration nicht in absoluten Werten anzugeben, sondern normiert bezüglich der wirkenden Massen, des Kröpfungsradius, des Zylinderabstands, dem Pleuelstangenverhältnis sowie dem Quadrat der Winkelgeschwindigkeit. Damit ergeben sich allgemeingültige Kennwerte, die von der jeweiligen Baugrösse und Drehgeschwindigkeit des Motors unabhängig sind.

Aufgrund der nicht vorhandenen Symmetrie des einfachen Kurbelsterns für den V16 können in erheblichem Masse freie Kräfte und Momente der beschleunigten Massen auftreten. Für den Fall eines V-Winkels von 90° besitzt das Triebwerk des V16 keinerlei freie Massenkräfte. Das freie Moment 1. Ordnung in horizontaler sowie vertikaler Richtung, welches durch die oszillierenden Massen verursacht wird, ist in diesem Fall identisch mit demjenigen der rotierenden Massen. Die freien Momente der 2. Ordnung, welche durch die oszillierenden Massen verursacht werden, eliminieren sich für die horizontale Richtung, während in der vertikalen Richtung ein resultierendes freies Moment bestehen bleibt. Für die Bewertung der Kurbelsterne ist es somit ausreichend, das freie Moment der rotierenden Massen sowie das vertikale Moment 2. Ordnung der oszillierenden Massen zu betrachten. Fig. 5 zeigt das normierte freie Moment der rotierenden Massen bzw. der oszillierenden Massen 1. Ordnung in der horizontalen und vertikalen Richtung sowie das normierte freie vertikale Moment 2. Ordnung der oszillierenden Massen für alle 5040 möglichen einfachen Kurbelsterne des V16. Für die Vorauswahl der Kurbelsterne wurden alle Kurbelsterne, welche ein vertikales Moment 2. Ordnung aufweisen, ausgeschlossen. Bezüglich des Moments der rotierenden Massen wurden die in Fig. 5 dargestellten 30 Kurbelsterne K mit den niedrigsten Werten verwendet. Aus den verbleibenden Kurbelsternen wurden wie im Folgenden dargestellt jene Kurbelsterne ermittelt, zu welchen optimierte Zündfolgen zur Verfügung stehen. Diese Kurbelsterne, für welche optimierte Zündfolgen existieren, sind separat gekennzeichnet.

Fig. 6 zeigt die entsprechenden Biegemomente der rotierenden Massen bzw. der oszillierenden Massen 1. Ordnung in horizontaler und vertikaler Richtung sowie die vertikalen Biegemomente 2. Ordnung der oszillierenden Massen. Die ausgewählten Kurbelsterne sowie diejenigen mit optimierten Zündfolgen sind hervorgehoben.

**Torsionsspannungen in der Kurbelwelle und Dissipation im Drehschwingungsdämpfer**

Der Gesamtkurbeltrieb eines Hubkolbenmotors, bestehend aus Kurbelwelle, Einzelkurbeln, und Schwungrad stellt ein Torsionsschwingungssystem dar, welches durch die transienten Drehmomentverläufe der einzelnen Zylinder zu Schwingungen angeregt wird. Die grundlegenden dynamischen Eigenschaften des Schwingungssystems können durch dessen Eigenschwingungsformen beschrieben werden. Die jeweilige Anregung einer Eigenschwingungsform hängt wesentlich von der Zündfolge ab, da diese die jeweiligen Phasenlagen zwischen den Drehmomentverläufen der einzelnen Zylinder bestimmt

Jede Torsionsdeformation der Kurbelwelle geht zwangsläufig einher mit entsprechenden mechanischen Spannungen. Bei modernen schnelllaufenden Viertakt-Hubkolbenmotoren erreichen diese in den kritischen Bereichen, welche typischerweise in den Übergangsradien der Haupt- und Hubzapfen sowie in den Ölbohrungsaustritten liegen, unzulässig hohe Werte bezüglich der Dauerfestigkeit des Kurbelwellenwerkstoffs. Um einen sicheren Betrieb dennoch zu gewährleisten, müssen die Schwingungsamplituden und die dadurch verursachten Torsionsspannungen auf ein zulässiges Mass begrenzt werden. Dies wird in der Regel erreicht, indem an der dem Schwungrad gegenüberliegenden Seite der Kurbelwelle, dem freien Ende, ein Drehschwingungsdämpfer angebracht wird. In der Praxis haben sich hier verschiedene technische Lösungen etabliert, wie der Gummidämpfer, der Viskoseöl-Drehschwingungsdämpfer, und der Blattfederdämpfer, deren Verwendung in der genannten Reihenfolge mit steigenden Kosten verbunden ist.

Bei der Optimierung der Zündfolge ist zu beachten, dass der im Simulationsmodell verwendete Drehschwingungsdämpfer das Optimierungsergebnis beeinflussen kann. Daher ist es notwendig, diese Parameter in die Optimierung mit einzubeziehen, oder zumindest im Rahmen einer Vorstudie sinnvoll festzulegen. Im vorliegenden Fall wurde insbesondere ein Viskoseöl-Drehschwingungsdämpfer in einfacher Ausführung berücksichtigt.

Sowohl die Bauart als auch die benötigte Grösse des Dämpfers werden massgeblich bestimmt durch die im motorischen Betrieb auftretenden Torsionsschwingungen. Neben der Motorgrösse, der Leistungsdichte, und der Schwingungscharakteristik des Gesamtkurbeltriebs, spielt hier die gewählte Zündfolge eine zentrale Rolle, da sie die Ausprägung der Schwingungsamplituden im Drehzahlbereich des Hubkolbenmotors massgeblich bestimmt. Durch die Auswahl einer schwingungstechnisch vorteilhaften Zündfolge lässt sich die benötigte Baugrösse des Dämpfers zum Teil erheblich verringern. Oftmals ist es auch möglich, auf eine einfachere Dämpferbauart zu wechseln, z. B. die Verwendung eines Viskoseöl-Drehschwingungsdämpfers anstatt eines Blattfederdämpfers, was erhebliche Kostenvorteile beinhaltet. Daher hängen sowohl der für den Dämpfer benötigte Bauraum, als auch die Kosten des Dämpfers, massgeblich von der Wahl der Zündfolge ab.

Die maximale dauerfest ertragbare Torsionsspannungsamplitude einer Kurbelwelle hängt erheblich von dem verwendeten Kurbelwellenwerkstoff sowie dessen Bearbeitung ab. Die Auswahl einer schwingungstechnisch "gutmütigen" Zündfolge kann die Torsionsbelastung mitunter soweit verringern, dass auf einen kostengünstigeren Kurbelwellenwerkstoff oder eine einfachere Bearbeitung der kritischen Zonen der Kurbelwelle zurückgegriffen werden kann. Beides hilft, die Herstellkosten signifikant zu senken.

Sowohl die Torsionsspannungen in der Kurbelwelle als auch die Dämpferverlustleistung hängen von der Drehzahl des Motors ab. Für die Optimierung wird daher der gesamte Nutzdrehzahlbereich des Motors betrachtet, und der jeweilige Maximalwert des betreffenden Kriteriums im Drehzahlbereich ist Grundlage für die Bewertung einer Zündfolge.

Die Torsionsdynamik hängt weiterhin von der schwungradseitigen Trägheit ab. Um einen möglichst breiten Anwendungsbereich abzudecken, wurde weiterhin eine Heavy Duty Anwendung mit schwerem Schwungrad sowie drehelastischer Entkoppelung des Abtriebsstrangs betrachtet, wie sie in einer Vielzahl von Bereichen zum Einsatz kommen kann.

Für die Optimierung wird eine Torsionsschwingungsberechnung für alle Zündfolgen durchgeführt, welche sich auf den zuvor anhand des Kriteriums der Massenkräfte und -momente ausgewählten Kurbelsternen befinden.

Für den V16 ergeben sich somit 3'840 mögliche Zündfolgen, welche mit den 30 ausgewählten Kurbelsternen gefahren werden können. Fig. 7 zeigt exemplarisch die max. Dämpferverlustleistung sowie die max. Torsionsspannungsamplitude in der Kurbelwelle für alle untersuchten Zündfolgen für eine Heavy Duty Anwendung mit drehelastischer Entkoppelung des Abtriebsstrangs. Jedes Kreuz in dem Diagramm repräsentiert dabei eine spezifische Zündfolge. Dabei ist über der x-Achse die im Motordrehzahlbereich maximale durch die Torsionsschwingungen auftretende Torsionsbelastung der Kurbelwelle aufgetragen. Über der y-Achse ist die maximale Verlustleistung aufgetragen, die aufgrund der bestehenden Torsionsschwingungen über den Drehschwingungsdämpfer abgeführt werden muss. Die angegebenen Werte stellen die über dem Drehzahlbereich maximal auftretenden Belastungen für alle untersuchten Zündfolgen dar. Oberhalb des Spannungslimits 1 sind die Torsionsbelastungen noch so hoch, dass typischerweise ein teurer Vergütungsstahl verwendet werden muss. Für Zündfolgen, die sich unterhalb des Spannungslimits 1 befinden, kann eine Kurbelwelle aus kostengünstigem AFP-Stahl verwendet werden. Es ist zu erkennen, dass die Torsionsschwingungsbelastung der Kurbelwelle durch die Auswahl einer günstigen Zündfolge um bis zu etwa 30% reduziert werden kann.

Das angegebene Limit für die Verlustleistung des Drehschwingungsdämpfers beträgt etwa 2.5 Promille der maximalen Motorleistung. Dieser geringe Wert erlaubt es, einen klein bauenden, kostengünstigen Viskoseöl-Drehschwingungsdämpfer einzusetzen. Es ist zu erkennen, dass die thermische Belastung des Drehschwingungsdämpfers durch die Auswahl einer günstigen Zündfolge um einen Faktor von bis zu ca. 3 reduziert werden kann.

Bei Verwendung der optimalen Zündfolgen werden die Torsionsschwingungen derart limitiert, dass erstens anstelle eines aufwendigen und damit teuren Blattfederdämpfers oder anstelle eines extrem grossen Viskoseöl-Drehschwingungsdämpfers der Einsatz eines kleinen und kostengünstigen Viskoseöl-Drehschwingungsdämpfers möglich ist, und zweitens eine kostengünstigere Kurbelwelle verwendet werden kann. Bei vergleichsweise stark limitierten Torsionsschwingungen kann die Kurbelwelle aus kostengünstigem AFP-Stahl, wie oft im PKW Bereich verwendet, anstatt aus Vergütungsstahl gefertigt werden.

**Schwingungsamplituden am Schwungrad und am freien Kurbelwellenende**

Bei Hubkolbenmotoren mit langen Kurbelwellen treten am freien Kurbelwellenende zum Teil erhebliche Torsionschwingungsamplituden und Winkelbeschleunigungen auf. Dies hat entsprechende Auswirkungen auf eventuell hier positionierte Räder- und Riementriebe des Hubkolbenmotors, welche verschiedene Aggregate wie die Wasserpumpe oder die Ölpumpe antreiben. Bei der Auswahl der Zündfolge darf daher die Torsionsdynamik des freien Kurbelwellenendes keinesfalls ausser Acht gelassen werden. Entsprechend wurden solche Zündfolgen ermittelt, welche für eine Mehrzahl an Anwendungen vorteilhaft sind. Nicht ausser Acht gelassen werden darf zudem die Schwingungsamplitude am Schwungrad. Zwar ist diese im Vergleich zu Motoren mit geringerer Zylinderzahl ohnehin moderat, kann jedoch bei der Auslegung torsionselastischer Elastomerkupplungen durchaus von Bedeutung sein.

Fig. 8 zeigt die Schwingungsamplituden am Schwungrad sowie am freien Kurbelwellenende für die Heavy Duty Anwendung. Schwungradseitig liegen die optimierten Zündfolgen im mittleren bis oberen Bereich aller Zündfolgen, während sie sich bezüglich der Amplituden am freien Kurbelwellenende im unteren Mittelfeld bewegen.

**Belastung der Kurbelwellenlagerung**

Bei der Dimensionierung der Kurbelwellenlagerung müssen vielfältige Aspekte berücksichtigt werden. Die hierbei zugrunde zu legenden Belastungen der Lagerung hängen neben dem Zylinderspitzendruck in mehrerlei Weise auch von der Zündfolge ab. Zunächst bestimmt die Zündfolge, ob und inwieweit sich die Kräfte zweier benachbarter Zylinder in der dazwischenliegenden gemeinsamen Lagerung zeitlich überschneiden und somit partiell addieren. Des Weiteren hängen die von der Lagerung aufzunehmenden Massenkräfte von dem Kurbelstern sowie dem inneren Massenausgleich ab, und sind somit indirekt durch die Zündfolge bestimmt. Eine zusätzliche Belastung der Kurbelwellenlagerung kann durch die Torsionsdeformation der Kurbelwelle entstehen, die mit einer radialen Verlagerung einzelner Hauptlagerzapfen einhergeht. Tritt diese bei einem Lager phasengleich mit der Zündbelastung eines benachbarten Zylinders auf, kann dies zu einer erheblichen Verstärkung der maximalen Lagerkraft führen. Bezüglich der thermischen Belastung der Gleitlager spielt die Zündfolge ebenso eine wichtige Rolle, da durch sie der zeitliche Abstand zweier aufeinander folgender Belastungsspitzen definiert wird. Ein grosser Abstand zwischen aufeinanderfolgenden Belastungsspitzen ermöglicht es, das Lager ausreichend mit Schmierstoff zu spülen und zu kühlen. Diese Aspekte müssen bei der Auswahl einer Zündfolge eine ausreichende Berücksichtigung finden.

Für die gewählte Kurbeltriebskonfiguration des V16 liegt die Anzahl unmittelbar aufeinanderfolgender Lagerbelastungen zwischen zwei und vier. Bei der Zündfolgenauswahl wurden nur jene Zündfolgen berücksichtigt, welche den minimalen Wert von zwei aufweisen.

**Ladungswechseldynamik**

Der Füllungsgrad eines Zylinders hängt wesentlich von den lokalen Druckverhältnissen im Ansaugkanal während der Ansaugphase ab. Diese hängen wiederum stark von dem räumlichen Abstand zweier direkt nacheinander gezündeter Zylinder im gleichen Ansaugkanal ab. Ferner hängt der Füllungsgrad eines Zylinders von den lokalen Druckverhältnissen im Abgaskollektor während der Ausstossphase ab. Hier ist die Situation weitaus komplexer als auf der Einlassseite, da Wellenausbreitungseffekte des Abgasstroms die Druckverhältnisse erheblich beeinflussen können. Eine fundierte Bewertung der ladungswechseltechnischen Interferenzen erfordert in der Regel eine Simulation der Ladungswechseldynamik.

Um einen möglichst hohen und uniformen Füllungsgrad der Zylinder zu erreichen, ist es von Vorteil, sowohl ansaug- als auch abgasseitig einen hinreichend grossen räumlichen Abstand zwischen zwei nacheinander gezündeten Zylindern zu gewährleisten. Des Weiteren erweisen sich für Hubkolbenmotoren in V-Bauweise mit bankseparaten Ansaug- und Abgassystemen bankalternierende Zündfolgen als vorteilhaft, da diese einen zeitlich grösseren Abstand zwischen zwei aufeinanderfolgenden Einlassvorgängen im gleichen Ansaugkanal bzw. Ausstossvorgang im gleichen Abgaskollektor aufweisen. Dies verringert Interferenzen, und erhöht somit die thermodynamische Effizienz des Hubkolbenmotors.

Aufgrund des gewählten einfachen Kurbelsterns ist es beim V16 nicht möglich, eine rein bankalternierende Zündfolge zu definieren. Es ist unvermeidlich, dass auf jeder Bank mindestens einmal zwei Zylinder nacheinander gezündet werden. Die maximale Anzahl, mit der dieses Ereignis in einer Zylinderbank auftritt, beträgt drei. Bei der Optimierung wurde gefordert, dass hier der minimale Wert von eins eingehalten wird. Die Anzahl Zylinder, die zwischen zwei unmittelbar auf der gleichen Bank nacheinander gezündeter Zylinder liegt, variiert zwischen eins und vier für die untersuchten Zündfolgen. Hier wird ein Wert von mindestens zwei gefordert, um die Interferenzen beim Ladungswechsel zu verringern. Bezüglich zwei Zündungen auf der gleichen Bank, zwischen denen eine Zündung auf der anderen Bank liegt, kann ein maximaler Abstand von einem Zylinder erreicht werden. Diese Forderung ist ebenfalls bei der Auswahl der Zündfolgen berücksichtigt.

## Torsionsdynamik der Nockenwelle

Ebenso wie im Fall der Kurbelwelle, hat die Zündfolge einen erheblichen Einfluss auf die Torsionsdynamik der Nockenwelle. So hängt zum einen die Erregung, welche die Nockenwelle über den Steuertrieb erfährt, von der Torsionsdynamik der Kurbelwelle ab. Darüber hinaus wird die Phasenlage der Drehmomentbelastungen der einzelnen Ventiltriebe funktionsgemäss ebenso durch die Zündfolge festgelegt. Je nach Bauart und -grösse, sowie in Abhängigkeit von möglicherweise über die Nockenwelle angetriebener Nebenaggregate, wie z. B. der Motorkühlwasserpumpe, können hier erhebliche Schwingungsamplituden auftreten. Diese müssen in einer separaten Torsionsschwingungsberechnung bewertet werden, und die Konstruktion muss den auftretenden Belastungen entsprechend Rechnung tragen. Die Torsionsdynamik der Nockenwelle findet bei der Zündfolgenoptimierung jedoch keine Berücksichtigung, da hier erfahrungsgemäss genügend konstruktive und technische Möglichkeiten vorhanden sind, der Torsionsbelastung gerecht zu werden.

## Einfluss der Baugrösse, der spezifischen Leistung, und des V-Winkels des Motors

Die Festlegung auf eine bestimmte Zündfolge legt nicht nur die Sequenz fest, mit der die einzelnen Brennräume des Motors mit Kraftstoff versorgt werden, sondern bestimmt auch die Topologie der zugrundeliegenden Kurbelwelle. Umgekehrt ist für eine bestehende Kurbelwellentopologie die Anzahl möglicher Zündfolgen bereits sehr stark reduziert.

Weiterhin besteht ein Zusammenhang zwischen möglichen Zündfolgen und dem V-Winkel. Die für den V16 aufgeführten Zündfolgen mit asymmetrischer Kurbelwelle funktionieren kinematisch betrachtet in einem V-Winkelbereich zwischen 67.5° und 112.5°; die vorteilhaften Eigenschaften sind jedoch am stärksten bei V90° und der direkten Umgebung. Die vorteilhaften Eigenschaften bezüglich Belastung der Kurbelwellenlagerung sowie der Ladungswechseldynamik sind weitgehend unempfindlich gegenüber einer Variation des V-Winkels. Die Torsionsdynamik des Kurbeltriebwerks reagiert hingegen vergleichsweise empfindlich gegenüber einer Variation des V-Winkels. So sind Winkelbereiche von etwa ±10° um den optimalen V-Winkel zu bevorzugen.

Dies wird durch Fig. 9 verdeutlicht. Dort ist oben das aus Fig. 7 bekannte Diagramm dargestellt, welches die maximale Torsionsspannungsamplitude und die maximale Verlustleistung des Drehschwingungsdämpfers beim Einsatz eines V16-Motors mit einem optimalen V-Winkel von 90° als Antrieb einer Heavy-Duty-Anwendung mit drehelastischer Kupplung für alle untersuchten Zündfolgen mit einfachem Kurbelstern darstellt. Unten ist zum Vergleich das gleiche Diagramm für einen V16-Motor mit einem nicht optimalen V-Winkel von 60° und einem zentralsymmetrischen Kurbelstern zeigt. Wie aus Fig. 9 ersichtlich sind bei 60° und mit zentralsymmetrischem Kurbelstern nur erheblich schlechtere Werte für die maximale Torsionsspannung und die maximale Dämpferverlustleistung erreichbar als mit einem V-Winkel von 90° und einem einfachen Kurbelstern.

Die vorliegende Untersuchung basiert auf einer Motorbaureihe mit 135mm Bohrungsdurchmesser und 2.25 Liter Hubraum pro Zylinder. Die spezifische Leistung beträgt dabei bis zu 34 kW pro Liter Hubraum, der Drehzahlbereich liegt zwischen 600 und 2100 U/min. Das effektive Massenträgheitsmoment des gesamten Kurbeltriebs inklusive dem Schwungrad beträgt etwa 8 kgm$^2$. Es wird jedoch erwartet, dass die Ergebnisse über einen weiten Bereich ihre Gültigkeit behalten. Prinzipiell kann davon ausgegangen werden, dass die vorteilhaften Eigenschaften bezüglich der Torsionsdynamik zumindest in einem Hubraumbereich von etwa 1 Liter bis 10 Liter, bevorzugt von 1.5 bis 5 Liter pro Zylinder ebenso vorhanden sind.

Die vorliegende Erfindung ist nicht auf spezifische Bauarten eines Viertakt-Hubkolbenmotors beschränkt. So können erfindungsgemäße Hubkolbenmotoren nach einem Diesel- oder nach einem Ottoverbrennungsverfahren betrieben werden. Dabei sind sowohl homogene, als auch alternative Verbrennungsverfahren denkbar.

Weiterhin können die erfindungsgemäßen Viertakt-Hubkolbenmotoren mit beliebigen Kraftstoffen betreibbar sein. Insbesondere ist der erfindungsgemäße Aufbau bzw. sind die erfindungsgemäßen Abfolgen unabhängig von dem gewählten Kraftstoff von Vorteil. Beispielsweise kann es sich bei dem Motor um einen Gasmotor handeln, insbesondere einen Ottomotor, welcher mit einem gasförmigen Kraftstoff wie Wasserstoff, Erdgas oder Autogas betrieben werden kann. Es kann sich jedoch auch um einen Motor handeln, welcher mit flüssigen Kraftstoffen betrieben wird.

Bei dem Motor kann es sich weiterhin um einen Saugmotor ohne Aufladung handeln. Genauso gut kann die vorliegende Erfindung jedoch auch bei Motoren mit einer einstufigen oder mehrstufigen Aufladung eingesetzt werden.

Der Motor kann dabei entweder drehsteif mit dem Abtrieb verbunden werden, oder über eine dreh- bzw. torsionselastische Kupplung.

## Anwendungsmöglichkeiten

Erfindungsgemäße Viertakt-Hubkolbenmotoren können in einer Vielzahl von unterschiedlichen Anwendungen zum Einsatz kommen.

Bei der Optimierung der Zündfolgen wurde der allgemeine Anwendungsfall "Heavy Duty" mit einem torsionselastisch angekoppelten Abtriebsstrang berücksichtigt. Da dies bei den meisten industriellen Anwendungen der untersuchten Leistungsklasse der Fall ist, deckt dieser Fall eine Vielzahl verschiedenster Einsatzbereiche ab.

Mögliche Anwendungen sind der Antrieb von Schwerlast- und Bergbaumaschinen, wobei auch hier ein mobiler oder stationärer Einsatz möglich ist. Entsprechende Bergbaumaschinen können sowohl im Untertagebau als auch im Tagebau einsetzbar sein. Beispielsweise kann es sich um Muldenkipper oder Bagger handeln.

Eine weitere Einsatzmöglichkeit ist der Einsatz als Hauptantrieb in einem Schiff.

Weiterhin kann der Motor auch als Hauptantrieb in einem Schienenfahrzeug eingesetzt werden. Beispielsweise kann der Motor dabei einen Elektrogenerator antreiben, über welchen wiederum die Motoren des Schienenfahrzeuges angetrieben werden. Alternativ kann der Antrieb auch über eine Wandlerkupplung und/oder ein Getriebe erfolgen.

Weiterhin kann der erfindungsgemäße Motor auch als Hauptantrieb in schweren militärischen Anwendungen wie beispielsweise zum Antrieb von Panzerfahrzeugen, Raketenträgern, Schnellbooten und U-Booten eingesetzt werden.

Weiterhin kann der Motor als Antrieb in der Öl- und Gasindustrie eingesetzt werden, insbesondere zum Antrieb von Pumpen. Auch außerhalb der Öl- und Gasindustrie ist ein Einsatz des Motors als Antrieb in der Fördertechnik und insbesondere als Pumpenantrieb denkbar.

Der erfindungsgemäße Motor kann für die stationäre oder mobile Stromerzeugung eingesetzt werden.

## Referenzen

[BucLau2014] Buczek, K.; Lauer, S.: Firing order optimization in FEV virtual engine. Proceedings of the Torsional Vibration Symposium 2014, Salzburg, May 2014.

[Hen2014a] Henninger, C.: Firing Sequence Optimization for a V20 Cylinder Diesel Engine. Proceedings of the Torsional Vibration Symposium 2014, Salzburg, May 2014.

[Hen2014b] Henninger, C.: Firing Sequence Optimisation on a V20. MTZ industrial 02(2014), pp. 60-65.

[KnoMal2010] Knorr, J.; Malischewski, T.; Weiss, J.: Firing Order Optimization Based on Integrated Simulation. GTI User Conference 2010.

[MaaKli1981] Maass, H.; Klier, H.: Kräfte, Momente und deren Ausgleich in der Verbrennungskraftmaschine. Wien, 1981.

[Nes1958] Nestorides, E.J. (Ed.): A Handbook on Torsional Vibration. Cambridge, 1958.

[PriOva2014] Priestner, C.; Ovari, T.; Brunner, M.; Zieher, F.: Crank train torsional vibration optimization. Proceedings of the Torsional Vibration Symposium 2014, Salzburg, May 2014.

[RønNie2003] Rønnedal, P.; Nielsen, H.B.: Firing Order Selection in Relation to Vibration Aspects. In: Proceedings of the 2003 Spring Technical Conference of the ASME Internal Combustion Engine Division in Salzburg, pp. 311-320, 2003.

[StaHen2014] Stadelmann, M.; Henninger, C.: Mokdad, B.: Generalized Torsional Vibration Analysis of Generating Sets for Diesel-Electric Power-trains. Tagungsband zum 4. Kongress zu Einsatz und Validierung von Simulationsmethoden für die Antriebstechnik in Lahnstein, September 2014, S. 182-194.

[Wil1935] Wilson, W.K.: Practical Solution of Torsional Vibration Problems. London, 1935.

## Patentansprüche

1. Viertakt-Hubkolbenmotor in V-Bauweise mit 16 Zylindern, mit Drehrichtung entgegen dem Uhrzeigersinn, mit einer Zündzeitpunktsteuerung, welche die Zylinder A1 bis A8 und B1 bis B8 in einer der folgenden Zündfolgen zündet, wobei die Drehrichtung sowie die Zylindernummerierung nach DIN ISO 1204 definiert sind:

    a) A1-B2-A5-B4-A7-B8-A3-A8-B5-A6-B7-A2-B3-A4-B1-B6
    b) A1-B2-A5-A2-B3-A4-B1-A8-B5-A6-B7-B4-A7-B8-A3-B6
    c) A1-B4-A3-B2-A7-B6-A5-B8-B3-A8-B7-A4-B5-A2-B1-A6
    d) A1-B4-A3-B2-B5-A2-B1-A6-B3-A8-B7-A4-A7-B6-A5-B8
    e) A1-B2-A6-B4-A8-A4-B1-A7-B6-A5-B8-A2-B3-B7-A3-B5
    f) A1-B2-A6-B4-A8-B7-A3-A7-B6-A5-B8-A2-B3-A4-B1-B5
    g) A1-B2-A6-A2-B3-A4-B1-A7-B6-A5-B8-B4-A8-B7-A3-B5
    h) A1-B4-A3-B2-A8-B5-A6-B7-B3-A7-B8-A4-B6-A2-B1-A5
    i) A1-B4-B8-A4-B6-A2-B1-A5-B3-A7-A3-B2-A8-B5-A6-B7
    j) A1-B4-A3-B2-B6-A2-B1-A5-B3-A7-B8-A4-A8-B5-A6-B7
    k) A1-B2-A6-B5-A8-A5-B1-A7-B6-A4-B8-A2-B3-B7-A3-B4
    l) A1-B2-A6-B5-A8-B7-A3-A7-B6-A4-B8-A2-B3-A5-B1-B4
    m) A1-B2-A6-A2-B3-A5-B1-A7-B6-A4-B8-B5-A8-B7-A3-B4

n) A1-B5-A3-B2-A8-B4-A6-B7-B3-A7-B8-A5-B6-A2-B1-A4

o) A1-B5-B8-A5-B6-A2-B1-A4-B3-A7-A3-B2-A8-B4-A6-B7

p) A1-B5-A3-B2-B6-A2-B1-A4-B3-A7-B8-A5-A8-B4-A6-B7.

2. Viertakt-Hubkolbenmotor in V-Bauweise mit 16 Zylindern, mit Drehrichtung mit dem Uhrzeigersinn, mit einer Zündzeitpunktsteuerung, welche die Zylinder A1 bis A8 und B1 bis B8 in einer der folgenden Zündfolgen zündet, wobei die Drehrichtung sowie die Zylindernummerierung nach DIN ISO 1204 definiert sind:

    a) A1-A6-B1-A2-B5-A4-B7-A8-B3-B8-A5-B6-A7-B2-A3-B4

    b) A1-B8-A5-B6-A7-A4-B7-A8-B3-A6-B1-A2-B5-B2-A3-B4

    c) A1-B6-B1-A4-B3-A2-B7-A6-B5-A8-A3-B8-A7-B4-A5-B2

    d) A1-B6-A3-B8-A7-B4-B7-A6-B5-A8-B1-A4-B3-A2-A5-B2

    e) A1-B7-A6-B5-A8-B2-A3-A7-B3-A5-B1-A2-B6-A4-B8-B4

    f) A1-A5-B1-A2-B6-A4-B8-A7-B3-B7-A6-B5-A8-B2-A3-B4

    g) A1-B7-A6-B5-A8-A4-B8-A7-B3-A5-B1-A2-B6-B2-A3-B4

    h) A1-B5-B1-A4-B3-A2-B8-A5-B6-A7-A3-B7-A8-B4-A6-B2

    i) A1-B5-A3-B7-B3-A2-B8-A5-B6-A7-B1-A4-A8-B4-A6-B2

    j) A1-B5-A3-B7-A8-B4-B8-A5-B6-A7-B1-A4-B3-A2-A6-B2

    k) A1-B7-A6-B4-A8-B2-A3-A7-B3-A4-B1-A2-B6-A5-B8-B5

    l) A1-A4-B1-A2-B6-A5-B8-A7-B3-B7-A6-B4-A8-B2-A3-B5

    m) A1-B7-A6-B4-A8-A5-B8-A7-B3-A4-B1-A2-B6-B2-A3-B5

    n) A1-B4-B1-A5-B3-A2-B8-A4-B6-A7-A3-B7-A8-B5-A6-B2

    o) A1-B4-A3-B7-B3-A2-B8-A4-B6-A7-B1-A5-A8-B5-A6-B2

    p) A1-B4-A3-B7-A8-B5-B8-A4-B6-A7-B1-A5-B3-A2-A6-B2.

3. Viertakt-Hubkolbenmotor in V-Bauweise mit 16 Zylindern nach Anspruch 1 oder 2, mit einer Kurbelwelle und einem auf der Kurbelwelle angeordneten Schwungrad, wobei die Kurbelwelle einen Kurbelstern bildende Kröpfungen aufweist, an welchen die Pleuel der Zylinder angreifen, wobei die Pleuel eines V-Segments jeweils an einer gemeinsamen Kröpfung angreifen,
wobei die Kröpfungen C1 bis C8 von der Schwungradseite aus gesehen in Drehrichtung eine der folgenden Abfolgen aufweisen, wobei die Kröpfungen von der Schwungradseite beginnend mit C1 bis C8 durchnummeriert sind:

    ii) C1-C6-C5-C2-C7-C4-C3-C8
    iii) C1-C7-C3-C4-C8-C2-C6-C5
    iv) C1-C5-C6-C2-C8-C4-C3-C7
    vi) C1-C4-C6-C2-C8-C5-C3-C7.

4. Viertakt-Hubkolbenmotor nach Anspruch 1 oder 2, mit einer Kurbelwelle und einem auf der Kurbelwelle angeordneten Schwungrad, wobei die Kurbelwelle einen Kurbelstern bildende Kröpfungen aufweist, an welchen die Pleuel der Zylinder angreifen, wobei die Pleuel eines V-Segments jeweils an einer gemeinsamen Kröpfung angreifen,
wobei die Kröpfungen C1 bis C8 von der Schwungradseite aus gesehen in Drehrichtung eine der folgenden Abfolgen aufweisen, wobei die Kröpfungen von der Schwungradseite beginnend mit C1 bis C8 durchnummeriert sind:

    i) C1-C8-C3-C4-C7-C2-C5-C6
    v) C1-C7-C3-C5-C8-C2-C6-C4,

wobei bevorzugt die folgende Kombination aus Kurbelstern und Zündfolge vorliegt:

    - Kurbelstern i), eine der Zündfolgen a, b
    - Kurbelstern v), eine der Zündfolgen k, l, m,

und/oder Viertakt-Hubkolbenmotor nach Ansprüchen 1 und 2 oder nach Ansprüchen 1 und 3, wobei eine der folgenden Kombinationen aus Kurbelstern und Zündfolge vorliegt:

    - Kurbelstern ii), eine der Zündfolgen c, d
    - Kurbelstern iii), eine der Zündfolgen e, f, g
    - Kurbelstern iv), eine der Zündfolgen h, i, j
    - Kurbelstern vi), eine der Zündfolgen n, o, p.

5. Viertakt-Hubkolbenmotor nach einem der vorangegangenen Ansprüche, wobei der V-Winkel zwischen 67,5° und 112,5° beträgt, bevorzugt zwischen 80° und 100°, weiter bevorzugt zwischen 85° und 95°, weiter bevorzugt zwischen 87° und 92°, weiter bevorzugt zwischen 89° und 91°, weiter bevorzugt 90° beträgt.

6. Viertakt-Hubkolbenmotor nach einem der vorangegangenen Ansprüche, wobei die Zündfolgen einen äquidistanten oder quasi-äquidistanten Zündabstand aufweisen, wobei der Zündabstand zwischen zwei aufeinander folgenden Zündungen bevorzugt zwischen 40° und 50° beträgt, weiter bevorzugt zwischen 42° und 48°, weiter bevorzugt zwischen 44° und 46° und weiter bevorzugt 45° beträgt.

**7.** Viertakt-Hubkolbenmotor nach einem der vorangegangenen Ansprüche, mit einem einfachen Kurbelstern, und/oder wobei die Kurbelwelle acht einen Kurbelstern bildende Kröpfungen aufweist, an welchen die Pleuel der Zylinder angreifen, wobei die Pleuel eines V-Segments jeweils an einer gemeinsamen Kröpfung angreifen, wobei es sich bevorzugt um einen einfachen Kurbelstern handelt, bei welchem die Kröpfungen äquidistant oder quasi-äquidistant verteilt sind, wobei bevorzugt der Winkelabstand zwischen im Winkel aufeinanderfolgenden Kröpfungen zwischen 40° und 50° beträgt, weiter bevorzugt zwischen 42° und 48°, weiter bevorzugt zwischen 44° und 46° und weiter bevorzugt 45° beträgt.

**8.** Viertakt-Hubkolbenmotor nach einem der vorangegangenen Ansprüche, wobei die Kurbelwelle aus einem AFP-Stahl gefertigt ist, und/oder mit einem Drehschwingungsdämpfer, wobei die Verlustleistung des Drehschwingungsdämpfers bevorzugt weniger als 6 Promille der maximalen Motorleistung beträgt, weiter bevorzugt weniger als 5 Promille, weiter bevorzugt weniger als 3,5 Promille, und weiter bevorzugt weniger als 2,5 Promille, und/oder wobei es sich bevorzugt um einen Viskoseöl-Drehschwingungsdämpfer handelt, und/oder mit einer Kurbelwelle und einem auf der Kurbelwelle angeordneten Schwungrad, wobei der Drehschwingungsdämpfer bevorzugt auf der dem Schwungrad gegenüberliegenden Seite der Kurbelwelle angeordnet ist.

**9.** Viertakt-Hubkolbenmotor nach einem der vorangegangenen Ansprüche, wobei der Hubraum pro Zylinder zwischen 1 l und 10 l beträgt, bevorzugt zwischen 1,5 l und 5 l, weiter bevorzugt zwischen 2 l und 3 l, und/oder wobei die Maximalleistung pro Liter Hubraum zwischen 20 kW und 80 kW beträgt, bevorzugt zwischen 30 kW und 60 kW, und/oder wobei der Motor in einem Drehzahlbereich betreibbar ist, welcher zwischen 400 und 3.000 U/min liegt, bevorzugt in einem Drehzahlbereich zwischen 600 und 2100 U/min, und/oder wobei der Motor eine Motordrehzahl-Steuerung aufweist, welche den Motor mit einer Soll-Motordrehzahl betreibt, wobei die Soll-Motordrehzahl bevorzugt durch die Motorsteuerung an Motor- und/oder Lastbedingungen anpassbar ist.

**10.** Viertakt-Hubkolbenmotor nach einem der vorangegangenen Ansprüchen, wobei der Motor für die beiden Zylinderbänke getrennte Ansaug- und/oder Abgasführungen aufweist, und/oder wobei der Motor ein Gasmotor ist und/oder mit einem flüssigen Kraftstoff betreibbar ist, wobei der Motor bevorzugt mit mindestens einem der folgenden Kraftstoffe betreibbar ist: gasförmiger Kraftstoff, insbesondere Wasserstoff, Erdgas, Biogas und/oder Autogas, Diesel und/oder Benzin, und/oder wobei der Motor wobei der Motor eine Direkteinspritzung aufweist und/oder eine Hochdruckeinspritzung, und/oder wobei der Motor mit einem Diesel- oder einem OttoVerbrennungsverfahren betreibbar ist, und/oder wobei die Motorsteuerung so ausgestaltet ist, dass der Motor mit homogenem, geschichteten und/oder einem anderen Verbrennungsverfahren betreibbar ist, und/oder wobei der Motor eine ein- oder mehrstufige Aufladung aufweist.

**11.** Verwendung eines Viertakt-Hubkolbenmotor in V-Bauweise nach einem der vorangegangenen Ansprüche, wobei der Motor als Antrieb in einer Schwerlast- und/oder Bergbau- und/oder Erdbewegungs- und/oder Transport- und/oder Umschlagmaschine eingesetzt wird, wobei der Motor bevorzugt einen Generator oder eine Hydraulikpumpe antreibt, über welchen ein Fahrwerk und/oder Arbeits-Aggregate der Schwerlast- und/oder Bergbau- und/oder Erdbewegungs- und/oder Transport- und/oder Umschlagmaschine angetrieben werden, und/oder wobei der Motor bevorzugt ein Fahrwerk und/oder Arbeits-Aggregate der Schwerlast- und/oder Bergbau- und/oder Erdbewegungs- und/oder Transport- und/oder Umschlagmaschine direkt oder über ein Getriebe antreibt, welches weiter bevorzugt mittels einer mechanischen Schaltkupplung und/oder einer Wandlerkupplung mit dem Motor in Verbindung steht, wobei es sich bei der Schwerlast- und/oder Bergbau- und/oder Erdbewegungs- und/oder Transport- und/oder Umschlagmaschine insbesondere um eine stationäre oder eine mobile Maschine handeln kann, insbesondere um eine Maschine im Untertagebau oder Tagebau, und/oder um einen Muldenkipper oder Bagger, und/oder wobei der Motor als Hauptantrieb in einem Schiff eingesetzt wird, wobei bevorzugt der Motor unmittelbar oder über eine Kupplung und/oder ein Getriebe eine Propellerwelle des Schiffes antreibt, und/oder dass der Motor als Hauptantrieb in einem Schienenfahrzeug eingesetzt wird, und/oder wobei der Motor als Hauptantrieb in schweren militärischen Anwendungen eingesetzt wird, insbesondere einem Panzerfahrzeug und/oder einem Raketenträger und/oder einem Schnellboot und/oder einem U-Boot, und/oder wobei der Motor als Antrieb in der Fluidförderungstechnik und/oder Öl- und Gasindustrie eingesetzt wird, insbesondere als Antrieb einer Pumpe und/oder einer Öl- und/oder Gasfördermaschine, einer Öl- und/oder Gastransportmaschine und/oder Öl- und/oder Gasverarbeitungsmaschine, und/oder wobei der Motor für die Stromerzeugung eingesetzt wird, wobei der Viertakt-Hubkolbenmotor bevorzugt einen Generator antreibt, und/oder wobei die Kurbelwelle des Motors und die Last momentensteif oder über eine drehelastische Kupplung miteinander verbunden sind.

12. Maschine mit einem Viertakt-Hubkolbenmotor nach einem der vorangegangenen Ansprüche, insbesondere stationäre Maschine oder mobile Maschine, insbesondere Schwerlast- und/oder Bergbau- und/oder Erdbewegungs- und/oder Transport- und/oder Umschlagmaschine, Schiff, Schienenfahrzeug, schwere militärische Maschine, Fluidfördermaschine, Öl- und/oder Gasfördermaschine, Öl- und/oder Gastransportmaschine und/oder Öl- und/oder Gasverarbeitungsmaschine und/oder Stromerzeugungsaggregat.

13. Zündzeitpunktsteuerung oder Software für eine Zündzeitpunktsteuerung für einen Viertakt-Hubkolbenmotor in V-Bauweise mit 16 Zylindern, wobei die Zündzeitpunktsteuerung bzw. die Software mindestens eine der in Anspruch 1 und/oder Anspruch 2 angegebenen Zündfolgen implementieren.

14. Verfahren zum Betrieb eines Viertakt-Hubkolbenmotor in V-Bauweise mit 16 Zylindern, wobei die Zylinder mit einer der in Anspruch 1 und/oder Anspruch 2 angegebenen Zündfolgen betrieben werden.

**Claims**

1. Four-stroke reciprocating piston engine in a V configuration having 16 cylinders, having a counterclockwise direction of rotation, having an ignition timing control which fires the cylinders A1 to A8 and B1 to B8 in one of the following firing sequences, wherein the direction of rotation and the cylinder numbering are defined in accordance with DIN ISO 1204:

 a) A1-B2-A5-B4-A7-B8-A3-A8-B5-A6-B7-A2-B3-A4-B1-B6

 b) A1-B2-A5-A2-B3-A4-B1-A8-B5-A6-B7-B4-A7-B8-A3-B6

 c) A1-B4-A3-B2-A7-B6-A5-B8-B3-A8-B7-A4-B5-A2-B1-A6

 d) A1-B4-A3-B2-B5-A2-B1-A6-B3-A8-B7-A4-A7-B6-A5-B8

 e) A1-B2-A6-B4-A8-A4-B1-A7-B6-A5-B8-A2-B3-B7-A3-B5

 f) A1-B2-A6-B4-A8-B7-A3-A7-B6-A5-B8-A2-B3-A4-B1-B5

 g) A1-B2-A6-A2-B3-A4-B1-A7-B6-A5-B8-B4-A8-B7-A3-B5

 h) A1-B4-A3-B2-A8-B5-A6-B7-B3-A7-B8-A4-B6-A2-B1-A5

 i) A1-B4-B8-A4-B6-A2-B1-A5-B3-A7-A3-B2-A8-B5-A6-B7

 j) A1-B4-A3-B2-B6-A2-B1-A5-B3-A7-B8-A4-A8-B5-A6-B7

 k) A1-B2-A6-B5-A8-A5-B1-A7-B6-A4-B8-A2-B3-B7-A3-B4

 l) A1-B2-A6-B5-A8-B7-A3-A7-B6-A4-B8-A2-B3-A5-B1-B4

 m) A1-B2-A6-A2-B3-A5-B1-A7-B6-A4-B8-B5-A8-B7-A3-B4

 n) A1-B5-A3-B2-A8-B4-A6-B7-B3-A7-B8-A5-B6-A2-B1-A4

 o) A1-B5-B8-A5-B6-A2-B1-A4-B3-A7-A3-B2-A8-B4-A6-B7

 p) A1-B5-A3-B2-B6-A2-B1-A4-B3-A7-B8-A5-A8-B4-A6-B7.

2. Four-stroke reciprocating piston engine in a V configuration having 16 cylinders, having a clockwise direction of rotation, having an ignition timing control which fires the cylinders A1 to A8 and B1 to B8 in one of the following firing sequences, wherein the direction of rotation and the cylinder numbering are defined in accordance with DIN ISO 1204:

 a) A1-A6-B1-A2-B5-A4-B7-A8-B3-B8-A5-B6-A7-B2-A3-B4

 b) A1-B8-A5-B6-A7-A4-B7-A8-B3-A6-B1-A2-B5-B2-A3-B4

 c) A1-B6-B1-A4-B3-A2-B7-A6-B5-A8-A3-B8-A7-B4-A5-B2

 d) A1-B6-A3-B8-A7-B4-B7-A6-B5-A8-B1-A4-B3-A2-A5-B2

 e) A1-B7-A6-B5-A8-B2-A3-A7-B3-A5-B1-A2-B6-A4-B8-B4

 f) A1-A5-B1-A2-B6-A4-B8-A7-B3-B7-A6-B5-A8-B2-A3-B4

 g) A1-B7-A6-B5-A8-A4-B8-A7-B3-A5-B1-A2-B6-B2-A3-B4

 h) A1-B5-B1-A4-B3-A2-B8-A5-B6-A7-A3-B7-A8-B4-A6-B2

 i) A1-B5-A3-B7-B3-A2-B8-A5-B6-A7-B1-A4-A8-B4-A6-B2

 j) A1-B5-A3-B7-A8-B4-B8-A5-B6-A7-B1-A4-B3-A2-A6-B2

 k) A1-B7-A6-B4-A8-B2-A3-A7-B3-A4-B1-A2-B6-A5-B8-B5

 l) A1-A4-B1-A2-B6-A5-B8-A7-B3-B7-A6-B4-A8-B2-A3-B5

 m) A1-B7-A6-B4-A8-A5-B8-A7-B3-A4-B1-A2-B6-B2-A3-B5

 n) A1-B4-B1-A5-B3-A2-B8-A4-B6-A7-A3-B7-A8-B5-A6-B2

 o) A1-B4-A3-B7-B3-A2-B8-A4-B6-A7-B1-A5-A8-B5-A6-B2

 p) A1-B4-A3-B7-A8-B5-B8-A4-B6-A7-B1-A5-B3-A2-A6-B2.

3. A four-stroke reciprocating piston engine in a V configuration having 16 cylinders in accordance with claim 1 or 2, having a crank shaft and a flywheel arranged on the crankshaft, wherein the crankshaft comprises cranks which form a crank star and at which the connecting rods of the cylinders engage, with the connecting rods of a V segment respectively engaging at a common crank,

wherein the cranks C1 to C8 have one of the following sequences in the direction of rotation, viewed from the flywheel side, with the cranks being numbered in order by C1 to C8 starting from the flywheel side:

    ii) C1 - C6 - C5 - C2 - C7 - C4 - C3 - C8
    iii) C1 - C7 - C3 - C4 - C8 - C2 - C6 - C5
    iv) C1 - C5 - C6 - C2 - C8 - C4 - C3 - C7
    vi) C1 - C4 - C6 - C2 - C8 - C5 - C3 - C7.

4. Four-stroke reciprocating piston engine in accordance with claim 1 or claim 2, having a crank shaft and a flywheel arranged on the crankshaft, wherein the crankshaft comprises cranks which form a crank star and at which the connecting rods of the cylinders engage, with the connecting rods of a V segment respectively engaging at a common crank, wherein the cranks C1 to C8 have one of the following sequences in the direction of rotation, viewed from the flywheel side, with the cranks being numbered in order by C1 to C8 starting from the flywheel side

    i) C1 - C8 - C3 - C4 - C7 - C2 - C5 - C6
    v) C1 - C7 - C3 - C5 - C8 - C2 - C6 - C4,

wherein the following combination of crank star and firing sequence is preferably present:

    - Crank star i), one of the firing sequences a, b
    - Crank star v), one of the firing sequences k, l, m,

and/or a four-stroke reciprocating piston engine in accordance with claims 1 and 2 or in accordance with claims 1 and 3, wherein one of the following combinations of crank star and firing sequence is preferably present:

    - Crank star ii), one of the firing sequences c, d
    - Crank star iii), one of the firing sequences e, f, g
    - Crank star iv), one of the firing sequences h, i, j
    - Crank star vi) one of the firing sequences n, o, p

5. Four-stroke reciprocating piston engine in accordance with one of the preceding claims, wherein the V angle amounts to between 67.5° and 112.5°, preferably between 80° and 100°, further preferably between 85° and 95°, further preferably between 87° and 92°, further preferably between 89° and 91°, and further preferably 90°.

6. Four-stroke reciprocating piston engine in accordance with one of the preceding claims, wherein the firing sequences have an equidistant or quasi-equidistant firing interval, and wherein the firing interval between two consecutive firings preferably amounts to between 40° and 50°, further preferably between 42° and 48°, further preferably between 44° and 46°, and further preferably amounts to 45°.

7. Four-stroke reciprocating piston engine in accordance with one of the preceding claims, having a simple crank star, and/or wherein the crankshaft comprises eight cranks which form a crank star and at which the connecting rods of the cylinders engage, wherein the connecting rods of a V segment respectively engage at a common crank, wherein it is preferably a simple crank star in which the cranks are distributed equidistantly or quasi-equidistantly, and wherein the angular spacing between cranks following one another at an angle preferably amounts to between 40° and 50°, further preferably between 42° and 48°, further preferably between 44° and 46°, and further preferably amounts to 45°.

8. Four-stroke reciprocating piston engine in accordance with one of the preceding claims, wherein the crankshaft is produced from steel for precipitating hardening from hot-working temperatures, and/or having a torsional vibration damper, wherein the power loss of the torsional vibration damper preferably amounts to less than 6 per thousand of the maximum engine power, further preferably less than 5 per thousand, further preferably less than 3.5 per thousand, and further preferably less than 2.5 per thousand, and/or wherein it is preferably a viscous oil torsional vibration damper, and/or having a crankshaft and a flywheel arranged on the crankshaft, with the torsional vibration damper preferably arranged at the side of the crankshaft disposed opposite the flywheel.

9. Four-stroke reciprocating piston engine in accordance with one of the preceding claims, wherein the cylinder displacement amounts to between 1 l and 10 l, preferably between 1.5 l and 5 l, and further preferably between 2 l and 3 l, and/or wherein the maximum power per liter displacement amounts to between 20 kW and 80 kW, preferably between 30 kW and 60 kW, and/or wherein the engine is operable in a speed range which lies between 400 and 3000 r.p.m, preferably in a speed range between 600 and 2100 r.p.m., and/or wherein the engine has an engine speed control which operates the engine at a desired engine speed, with the desired engine speed preferably being adaptable to engine and/or load conditions by the engine control.

10. Four-stroke reciprocating piston engine in accordance with one of the preceding claims, wherein the engine has separate intake and/or exhaust manifolds for the two cylinder banks, and/or wherein the engine is a gas engine and/or is operable with a liquid fuel, with the engine preferably being operable with at least one of the following fuels: gaseous fuel, in particular hydrogen, natural gas, biogas and/or liquefied gas, diesel and/or gasoline, and/or wherein the engine has direct injection and/or high-pressure injection, and/or wherein the engine is operable by a diesel combustion method or by a gasoline combustion method, and/or wherein the engine control is configured such that the engine is operable by a homogeneous, a stratified and/or another combustion method, and/or wherein the engine has a single-stage or multi-stage charge.

11. Use of four-stroke reciprocating piston engine in V configuration in accordance with one of the preceding claims, wherein the engine is used as a drive in a heavy-duty machine, and/or mining machinery, and/or an earth-moving machine, and/or a transport machine and/or a transfer machine, wherein the engine preferably drives a generator or a hydraulic pump via which an undercarriage and/or working units of the heavy-duty machine, and/or mining machinery, and/or earth-moving machine, and/or transport machine, and/or transfer machine are driven, and/or wherein the engine preferably drives an undercarriage, and/or working units of the heavy-duty machine and/or mining machinery, and/or earth-moving machine, and/or transport machine, and/or transfer machine directly or via a transmission which is further preferably connected to the engine by means of a mechanical clutch and/or a torque converter, wherein the heavy-duty machine, and/or mining machinery, and/or earth-moving machine, and/or transport machine, and/or transfer machine can in particular be a stationary machine or a mobile machine, in particular a machine in underground mining or strip mining, and/or a dumper truck or excavator, and/or wherein the engine is used as the main drive in a ship, with the engine preferably driving a propeller shaft of the ship directly or via a clutch and/or a transmission, and/or in that the engine is used as the main drive in a rail vehicle, and/or wherein the engine is used as the main drive in heavy military applications, in particular in an armored vehicle, and/or in a rocket carrier, and/or in a speedboat, and/or in a submarine, and/or wherein the engine is used as a drive in fluid-conveying technology and/or in the oil and gas industry, in particular as a drive of a pump and/or of an oil-extraction machine and/or gas-extraction machine, of an oil and/or gas transport machine and/or of an oil and/or gas processing machine, and/or wherein the engine is used for power generation, with the four-stroke reciprocating piston engine preferably driving a generator, and/or wherein the crankshaft of the engine and the load are connected to one another in a torsionally rigid manner or via a torsionally flexible coupling.

12. Machine with a four-stroke reciprocating piston engine in accordance with one of the preceding claims, in particular a stationary machine or a mobile machine, in particular a heavy-duty machine, and/or mining machinery, and/or earth-moving machine, and/or transport machine, and/or transfer machine, a ship, a rail vehicle, a heavy military machine, a fluid-conveying machine, an oil-extraction and/or gas-extraction machine, an oil and/or gas transport machine, and/or oil and/or gas processing machine, and/or a power generation unit.

13. Ignition timing control or software for an ignition timing control for a four-stroke reciprocating piston engine in a V configuration having 16 cylinders, wherein the ignition timing control or the software implements at least one of the firing sequences indicated in claim 1 and/or in claim 2.

14. A method of operating a four-stroke reciprocating piston engine in a V configuration having 16 cylinders, wherein the cylinders are operated using one of the firing sequences indicated in claim 1 and/or in claim 2.

**Revendications**

1. Moteur quatre temps à pistons alternatifs en V comprenant 16 cylindres, avec sens de rotation inverse au sens des aiguilles d'une montre, avec une commande de moment d'allumage, laquelle allume les cylindres A1 à A8 et B1 à B8 dans l'une des séquences d'allumage suivantes, le sens de rotation ainsi que la numérotation des cylindres étant définis suivant DIN IDO 1204 :

   a) A1-B2-A5-B4-A7-B8-A3-A8-B5-A6-B7-A2-B3-A4-B1-B6
   b) A1-B2-A5-A2-B3-A4-B1-A8-B5-A6-B7-B4-A7-B8-A3-B6
   c) A1-B4-A3-B2-A7-B6-A5-B8-B3-A8-B7-A4-B5-A2-B1-A6
   d) A1-B4-A3-B2-B5-A2-B1-A6-B3-A8-B7-A4-A7-B6-A5-B8
   e) A1-B2-A6-B4-A8-A4-B1-A7-B6-A5-B8-A2-B3-B7-A3-B5
   f) A1-B2-A6-B4-A8-B7-A3-A7-B6-A5-B8-A2-B3-A4-B1-B5

g)    A1-B2-A6-A2-B3-A4-B1-A7-B6-A5-B8-B4-A8-B7-A3-B5

h)    A1-B4-A3-B2-A8-B5-A6-B7-B3-A7-B8-A4-B6-A2-B1-A5

i)    A1-B4-B8-A4-B6-A2-B1-A5-B3-A7-A3-B2-A8-B5-A6-B7

j)    A1-B4-A3-B2-B6-A2-B1-A5-B3-A7-B8-A4-A8-B5-A6-B7

k)    A1-B2-A6-B5-A8-A5-B1-A7-B6-A4-B8-A2-B3-B7-A3-B4

l)    A1-B2-A6-B5-A8-B7-A3-A7-B6-A4-B8-A2-B3-A5-B1-B4

m)    A1-B2-A6-A2-B3-A5-B1-A7-B6-A4-B8-B5-A8-B7-A3-B4

n)    A1-B5-A3-B2-A8-B4-A6-B7-B3-A7-B8-A5-B6-A2-B1-A4

o)    A1-B5-B8-A5-B6-A2-B1-A4-B3-A7-A3-B2-A8-B4-A6-B7

p)    A1-B5-A3-B2-B6-A2-B1-A4-B3-A7-B8-A5-A8-B4-A6-B7.

2.    Moteur quatre temps à pistons alternatifs en V comprenant 16 cylindres, avec sens de rotation dans le sens des aiguilles d'une montre, avec une commande de moment d'allumage, laquelle allume les cylindres A1 à A8 et B1 à B8 dans l'une des séquences d'allumage suivantes, le sens de rotation ainsi que la numérotation des cylindres étant définis suivant DIN IDO 1204 :

a)    A1-A6-B1-A2-B5-A4-B7-A8-B3-B8-A5-B6-A7-B2-A3-B4

b)    A1-B8-A5-B6-A7-A4-B7-A8-B3-A6-B1-A2-B5-B2-A3-B4

c)    A1-B6-B1-A4-B3-A2-B7-A6-B5-A8-A3-B8-A7-B4-A5-B2

d)    A1-B6-A3-B8-A7-B4-B7-A6-B5-A8-B1-A4-B3-A2-A5-B2

e)    A1-B7-A6-B5-A8-B2-A3-A7-B3-A5-B1-A2-B6-A4-B8-B4

f)    A1-A5-B1-A2-B6-A4-B8-A7-B3-B7-A6-B5-A8-B2-A3-B4

g)    A1-B7-A6-B5-A8-A4-B8-A7-B3-A5-B1-A2-B6-B2-A3-B4

h)    A1-B5-B1-A4-B3-A2-B8-A5-B6-A7-A3-B7-A8-B4-A6-B2

i)    A1-B5-A3-B7-B3-A2-B8-A5-B6-A7-B1-A4-A8-B4-A6-B2

j)    A1-B5-A3-B7-A8-B4-B8-A5-B6-A7-B1-A4-B3-A2-A6-B2

k)    A1-B7-A6-B4-A8-B2-A3-A7-B3-A4-B1-A2-B6-A5-B8-B5

l)    A1-A4-B1-A2-B6-A5-B8-A7-B3-B7-A6-B4-A8-B2-A3-B5

m)    A1-B7-A6-B4-A8-A5-B8-A7-B3-A4-B1-A2-B6-B2-A3-B5

n)    A1-B4-B1-A5-B3-A2-B8-A4-B6-A7-A3-B7-A8-B5-A6-B2

o)    A1-B4-A3-B7-B3-A2-B8-A4-B6-A7-B1-A5-A8-B5-A6-B2

p)    A1-B4-A3-B7-A8-B5-B8-A4-B6-A7-B1-A5-B3-A2-A6-B2.

3.    Moteur quatre temps à pistons alternatifs en V comprenant 16 cylindres selon la revendication 1, avec un vilebrequin et un volant d'inertie disposé sur le vilebrequin, le vilebrequin présentant des coudes formant une étoile de manivelle sur laquelle les bielles des cylindres ont prise, les bielles d'un segment en V ayant respectivement prise sur un coude commun,

les coudes C1 à C8 présentant, dans le sens de rotation en vue du côté du volant d'inertie, l'une des séquences suivantes, les coudes commençant du côté du volant d'inertie étant numérotés par C1 à C8 :

ii) C1 - C6 - C5 - C2 - C7 - C4 - C3 - C8
iii) C1 - C7 - C3 - C4 - C8 - C2 - C6 - C5
iv) C1 - C5 - C6 - C2 - C8 - C4 - C3 - C7
vi) C1 - C4 - C6 - C2 - C8 - C5 - C3 - C7.

4.    Moteur quatre temps à pistons alternatifs en V comprenant 16 cylindres selon la revendication 1 ou 2, avec un vilebrequin et un volant d'inertie disposé sur le vilebrequin, le vilebrequin présentant des coudes formant une étoile de manivelle sur laquelle les bielles des cylindres ont prise, les bielles d'un segment en V ayant respectivement prise sur un coude commun,

les coudes C1 à C8 présentant, dans le sens de rotation en vue du côté du volant d'inertie, l'une des séquences suivantes, les coudes commençant du côté du volant d'inertie étant numérotés par C1 à C8 :

i) C1 - C8 - C3 - C4 - C7 - C2 - C5 - C6
v) C1 - C7 - C3 - C5 - C8 - C2 - C6 - C4,

la combinaison suivante constituée de l'étoile de manivelle et de la séquence d'allumage étant de préférence présente :

- étoile de manivelle i), une des séquences d'allumage a, b,
- étoile de manivelle v), une des séquences d'allumage k, l, m,

et/ou moteur quatre temps à pistons alternatifs selon les revendications 1 et 2 ou selon les revendications 1 et 3, une des combinaisons suivantes constituée de l'étoile de manivelle et de la séquence d'allumage étant présente :

- étoile de manivelle ii), une des séquences d'allumage c, d
- étoile de manivelle iii), une des séquences d'allumage e, f, g

- étoile de manivelle iv), une des séquences d'allumage h, i, j
- étoile de manivelle vi), une des séquences d'allumage n, o, p.

5. Moteur quatre temps à pistons alternatifs selon l'une quelconque des revendications précédentes, l'angle V étant compris entre 67,5° et 112,5°, de préférence entre 80° et 100°, de manière encore plus préférée entre 85° et 95°, de manière encore plus préférée entre 87° et 92°, de manière encore plus préférée entre 89° et 91, de manière encore plus préférée étant de 90°.

6. Moteur quatre temps à pistons alternatifs selon l'une quelconque des revendications précédentes, les séquences d'allumage présentant un écartement d'allumage équidistant ou quasi équidistant, l'écartement d'allumage entre deux allumages successifs étant de préférence compris entre 40° et 50°, de manière encore plus préférée entre 42° et 48°, de manière encore plus préférée entre 44° et 48° et de manière encore plus préférée étant de 45°.

7. Moteur quatre temps à pistons alternatifs selon l'une quelconque des revendications précédentes, comprenant une étoile de manivelle simple, et/ou le vilebrequin présentant huit coudes formant une étoile de manivelle sur laquelle les bielles des cylindres ont prise, les bielles d'un segment en V ayant respectivement prise sur un coude commun, l'étoile de manivelle étant de préférence une étoile de manivelle simple, dans laquelle les coudes sont répartis de manière équidistante ou quasi équidistante, l'écartement angulaire entre les coudes se succédant en angle étant compris de préférence entre 40° et 50°, de manière encore plus préférée entre 42° et 48°, de manière encore plus préférée entre 44° et 46° et de manière encore plus préférée étant de 45°.

8. Moteur quatre temps à pistons alternatifs selon l'une quelconque des revendications précédentes, le vilebrequin étant fabriqué dans un acier ferrito-perlitique à durcissement par précipitation, et/ou avec un amortisseur de vibrations torsionnelles, la perte de puissance de l'amortisseur de vibrations torsionnelles étant de préférence inférieure à 6 pour mille de la puissance maximale du moteur, de manière encore plus préférée inférieure à 5 pour mille, de manière encore plus préférée inférieure à 3,5 pour mille et de manière encore plus préférée inférieure à 2,5 pour mille, et/ou l'amortisseur de vibrations torsionnelles étant de préférence un amortisseur de vibrations torsionnelles de viscosité, et/ou avec un vilebrequin et un volant d'inertie disposé sur le vilebrequin, l'amortisseur de vibrations torsionnelles étant disposé de préférence sur le côté du vilebrequin, opposé au volant d'inertie.

9. Moteur quatre temps à pistons alternatifs selon l'une quelconque des revendications précédentes, la cylindrée par cylindre étant comprise entre 1 l et 10 l, de préférence entre 1,5 l et 5 l, de manière encore plus préférée entre 2 l et 3 l, et/ou la puissance maximale par litre de cylindrée étant comprise entre 20 kW et 80 kW, de préférence entre 30 W et 60 kW, et/ou le moteur étant exploitable dans une plage de vitesse de rotation qui est située entre 400 et 3000 t/min, de préférence dans une plage de vitesse de rotation comprise entre 600 et 2100 t/min, et/ou le moteur présentant une commande de vitesse de rotation, laquelle fait fonctionner le moteur avec une vitesse de rotation théorique du moteur, la vitesse de rotation théorique du moteur étant adaptable aux conditions du moteur et/ou aux conditions de charge au moyen de la commande de moteur.

10. Moteur quatre temps à pistons alternatifs selon l'une quelconque des revendications précédentes, le moteur présentant pour les deux rangées de cylindres des guidages d'aspiration et/ou d'évacuation séparés, et/ou le moteur étant un moteur à gaz et/ou étant exploitable avec un carburant liquide, le moteur étant exploitable de préférence avec au moins l'un des carburants suivants : carburant gazeux, notamment hydrogène, gaz naturel, biogaz et/ou gaz de pétrole liquéfié, diesel et/ou essence, et/ou le moteur présentant une injection directe et/ou une injection à haute pression, et/ou le moteur étant exploitable avec un procédé de combustion Diesel ou à cycle Otto, et/ou la commande de moteur étant conçue de manière à ce que le moteur soit exploitable avec un procédé de combustion homogène, stratifiée et/ou un autre procédé de combustion, et/ou le moteur présentant une charge à un étage ou à plusieurs étages.

11. Utilisation d'un moteur quatre temps à pistons alternatifs en V selon l'une quelconque des revendications précédentes, le moteur étant utilisé en tant qu'entraînement dans un engin à usage industriel et/ou un engin minier et/ou un engin de terrassement et/ou de transport et/ou dans un engin de transbordement, le moteur entraînant de préférence un générateur ou une pompe hydraulique, par l'intermédiaire duquel un train de roulement et/ou des unités de travail de l'engin à usage industriel et/ou de l'engin minier et/ou de l'engin de terrassement et/ou de transport et/ou de l'engin de transbordement sont entraînés, et/ou le moteur entraînant de préférence un train de roulement et/ou des unités de travail de l'engin à usage industriel et/ou de l'engin minier et/ou de l'engin de terrassement et/ou de transport et/ou de l'engin de transbordement directement ou par l'intermédiaire d'un engrenage lequel est en liaison avec le moteur de manière plus préférée au moyen d'un accouplement mécanique et/ou d'un accouplement de convertisseur, l'engin à usage industriel et/ou l'engin minier et/ou l'engin de terrassement et/ou de transport et/ou l'engin de transbordement pouvant être notamment un engin stationnaire ou un engin mobile, notamment un engin minier souterrain ou à ciel ouvert et/ou un camion-benne ou un excavateur,
et/ou le moteur étant utilisé en tant qu'entraînement principal dans un bateau, le moteur entraînant de préférence un arbre porte-hélice du bateau directement ou par l'intermédiaire d'un accouplement et/ou d'un engrenage,
et/ou le moteur étant utilisé en tant qu'entraînement principal dans un véhicule sur rail,
et/ou le moteur étant utilisé en tant qu'entraînement principal dans des applications militaires hautement difficiles, notamment dans un véhicule blindé et/ou un véhicule porteur de fusée et/ou une vedette et/ou un sous-marin,
et/ou le moteur étant utilisé en tant qu'entraînement pour la technologie d'exploitation des fluides et/ou l'industrie pétrolière et l'industrie du gaz, notamment en tant qu'entraînement d'une pompe et/ou d'une machine d'exploitation pétrolière et/ou d'exploitation de gaz, d'une machine de transport de pétrole et/ou de gaz et/ou d'une machine de transformation de pétrole et/ou de gaz,
et/ou le moteur étant utilisé pour la production de courant, le moteur quatre temps à pistons alternatifs entraînant de préférence un générateur,
et/ou le vilebrequin du moteur et la charge étant reliés entre eux de manière rigide aux moments ou par l'intermédiaire d'un accouplement flexible en torsion.

**12.** Engin comprenant un moteur quatre temps à pistons alternatifs selon l'une quelconque des revendications précédentes, notamment engin stationnaire ou engin mobile, notamment engin à usage industriel et/ou engin minier et/ou engin de terrassement et/ou de transport et/ou engin de transbordement, bateau, véhicule sur rail, engin militaire lourd, engin d'exploitation des fluides, engin d'exploitation pétrolière et/ou d'exploitation de gaz, engin de transport de pétrole et/ou de gaz et/ou engin de transformation du pétrole et/ou du gaz et/ou groupe générateur de courant.

**13.** Commande de moment d'allumage ou logiciel pour une commande de moment d'allumage pour un moteur quatre temps à pistons alternatifs en V comprenant 16 cylindres, la commande de moment d'allumage ou le logiciel réalisant au moins l'une des séquences d'allumage indiquée dans la revendication 1 et/ou la revendication 2.

**14.** Procédé de fonction d'un moteur quatre temps à pistons alternatifs en V comprenant 16 cylindres, les cylindres étant exploités avec l'une des séquences d'allumage indiquées dans la revendication 1 et/ou la revendication 2.

**Fig. 1**

# Fig. 2

# Fig. 3

**ISO 1204**
**Sicht von oben**

Schwungrad

A1 A2 A3 A4 A5 A6 A7 A8

B1 B2 B3 B4 B5 B6 B7 B8

# Fig. 4a

| I | II | III |
|---|---|---|
| 1<br>8   6<br>3   5<br>4   2<br>7 | 1<br>6   8<br>5   3<br>2   4<br>7 | 1<br>7   5<br>3   6<br>4   2<br>8 |
| Zündfolgen a, b | Zündfolgen c, d | Zündfolgen e, f, g |

| IV | V | VI |
|---|---|---|
| 1<br>5   7<br>6   3<br>2   4<br>8 | 1<br>7   4<br>3   6<br>5   2<br>8 | 1<br>4   7<br>6   3<br>2   5<br>8 |
| Zündfolgen h, i, j | Zündfolgen k, l, m | Zündfolgen n, o, p |

# Fig. 4b

| I | II | III |
|---|---|---|
| | | |
| Zündfolgen a, b | Zündfolgen c, d | Zündfolgen e, f, g |

| IV | V | VI |
|---|---|---|
| | | |
| Zündfolgen h, i, j | Zündfolgen k, l, m | Zündfolgen n, o, p |

## Fig. 5

# Fig. 6

Y-axis: Norm. vertikales Biegemoment 2. Ordnung der oszillierenden Massen

X-axis: Norm. Biegemoment der rotierenden Massen sowie der oszillierenden Massen 1. Ordnung (horizontal und vertikal)

Legend:
× Gesamt
◇ Ausgewählt
◆ Optimierte ZF

# Fig. 7

**Max. Torsionsspannungsamplitude**

# Fig. 8

# Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2740389 A
- US 7979193 B
- EP 1793104 B9

**In der Beschreibung aufgeführte Nicht-Patentliteratur**

- **BUCZEK, K. ; LAUER, S.** *Firing order optimization in FEV virtual engine. Proceedings of the Torsional Vibration Symposium 2014,* Mai 2014
- **HENNINGER, C.** Firing Sequence Optimization for a V20 Cylinder Diesel Engine. *Proceedings of the Torsional Vibration Symposium,* Mai 2014
- **HENNINGER, C.** Firing Sequence Optimisation on a V20. *MTZ industrial,* 2014, vol. 02, 60-65
- **KNORR, J. ; MALISCHEWSKI, T. ; WEISS, J.** Firing Order Optimization Based on Integrated Simulation. *GTI User Conference,* 2010
- **MAASS, H. ; KLIER, H. ; KRÄFTE.** *Momente und deren Ausgleich in der Verbrennungskraftmaschine,* 1981
- A Handbook on Torsional Vibration. 1958
- **PRIESTNER, C. ; OVARI, T. ; BRUNNER, M. ; ZIEHER, F.** Crank train torsional vibration optimization. *Proceedings of the Torsional Vibration Symposium 2014,* Mai 2014
- **RØNNEDAL, P. ; NIELSEN, H.B.** Firing Order Selection in Relation to Vibration Aspects. *Proceedings of the 2003 Spring Technical Conference of the ASME Internal Combustion Engine Division in Salzburg,* 2003, 311-320
- **STADELMANN, M. ; HENNINGER, C. ; MOKDAD, B.** Generalized Torsional Vibration Analysis of Generating Sets for Diesel-Electric Power-trains. *Tagungsband zum 4. Kongress zu Einsatz und Validierung von Simulationsmethoden für die Antriebstechnik in Lahnstein,* September 2014, 182-194
- **WILSON, W.K.** *Practical Solution of Torsional Vibration Problems,* 1935